(19) Europäisches Patentamt
European Patent Office
Office européen des brevets

(11) **EP 4 249 440 A1**

(12) **EUROPEAN PATENT APPLICATION**
published in accordance with Art. 153(4) EPC

(43) Date of publication:
**27.09.2023 Bulletin 2023/39**

(21) Application number: **22745805.6**

(22) Date of filing: **24.01.2022**

(51) International Patent Classification (IPC):
$C01G\ 53/00^{(2006.01)}$    $H01M\ 4/13^{(2010.01)}$
$H01M\ 4/36^{(2006.01)}$    $H01M\ 4/505^{(2010.01)}$
$H01M\ 4/525^{(2010.01)}$    $H01M\ 4/62^{(2006.01)}$
$H01G\ 11/06^{(2013.01)}$    $H01G\ 11/30^{(2013.01)}$
$H01M\ 10/052^{(2010.01)}$    $H01M\ 10/0562^{(2010.01)}$

(52) Cooperative Patent Classification (CPC):
C01G 53/00; H01G 11/06; H01G 11/30; H01M 4/13;
H01M 4/36; H01M 4/505; H01M 4/525; H01M 4/62;
H01M 10/052; H01M 10/0562

(86) International application number:
**PCT/JP2022/002443**

(87) International publication number:
**WO 2022/163584 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.01.2021 JP 2021013704
23.08.2021 JP 2021135749
23.08.2021 JP 2021135751**

(71) Applicant: **GS Yuasa International Ltd.
Kisshoin, Minami-ku,
Kyoto-shi, Kyoto 601-8520 (JP)**

(72) Inventors:
• **YOSHIKAWA Daisuke
Kyoto-shi, Kyoto 601-8520 (JP)**
• **SUYAMA Motoshi
Kyoto-shi, Kyoto 601-8520 (JP)**

(74) Representative: **Isarpatent
Patent- und Rechtsanwälte Barth
Charles Hassa Peckmann & Partner mbB
Friedrichstrasse 31
80801 München (DE)**

(54) **ACTIVE MATERIAL PARTICLES, ELECTRODE, POWER STORAGE ELEMENT, NONAQUEOUS ELECTROLYTE SECONDARY BATTERY, ALL-SOLID-STATE SECONDARY BATTERY, METHOD FOR PRODUCING ACTIVE MATERIAL PARTICLES, AND POWER STORAGE DEVICE**

(57) An active material particle according to an aspect of the present invention contains an active material base material and a covering layer covering at least a part of a surface of the active material base material, the covering layer contains an oxide containing lithium atoms and titanium atoms, and a molar ratio of a content of the lithium atoms to the titanium atoms in the oxide is more than 1 and 4 or less.

Fig. 1

EP 4 249 440 A1

## Description

TECHNICAL FIELD

The present invention relates to an active material particle (hereinafter, also referred to as a positive active material for a nonaqueous electrolyte secondary battery), an electrode (hereinafter, also referred to as an electrode for a nonaqueous electrolyte secondary battery), an energy storage device (hereinafter, also referred to as a nonaqueous electrolyte secondary battery), an all-solid-state secondary battery (hereinafter, also referred to as an all-solid-state battery), a method for producing active material particles, and an energy storage apparatus.

BACKGROUND ART

A lithium ion secondary battery is widely in use for electronic equipment such as personal computers and communication terminals, automobiles, and the like because the battery has high energy density. The lithium ion secondary battery generally includes a pair of electrodes, which are electrically separated from each other by a separator, and a nonaqueous electrolyte interposed between the electrodes, and is configured to allow lithium ions to be transferred between the two electrodes for charge-discharge. A capacitor such as a lithium ion capacitor is also widely in use as an energy storage device except for the lithium ion secondary battery. Energy storage devices using a solid-state electrolyte as a nonaqueous electrolyte, such as all-solid-state batteries, have also been developed.

As a positive active material for a nonaqueous electrolyte secondary battery represented by a lithium secondary battery and an all-solid-state secondary battery, a positive active material has been heretofore studied which includes, on a surface of a substance capable of storing and releasing lithium ions, a substance having a different composition or structure (see, for example, Patent Documents 1 to 5). In particular, as active materials that can be suitably applied to all-solid-state batteries, various active material particles whose surfaces are covered with, for example, an oxide having lithium ion conductivity have been developed.

According to Patent Document 1, "0.05 parts by weight of $Li_2ZrO_3$ powder was mixed with 100 parts by weight of $LiCoO_2$ powder in a solid phase, and the mixture was then heat-treated at 750°C for 5 hours to produce a lithium cobalt-based positive active material in which $LiCoO_2$ is coated with $Li_2ZrO_3$" (paragraph [0081]). In addition, according to this document, "0.05 parts by weight of $Li_2TiO_3$ powder was mixed with 100 parts by weight of $LiCoO_2$ powder in a solid phase, and the mixture was then heat-treated at 750°C for 5 hours to produce a lithium cobalt-based positive active material in which $LiCoO_2$ is coated with $Li_2TiO_3$" (paragraph [0082]). In addition, according to this document, a positive electrode was produced using the produced positive active material, a porous polyethylene separation film was interposed between the positive electrode and a negative electrode to produce an electrode assembly, the electrode assembly was located inside a battery case, and an electrolyte solution was injected into the case to produce a coin cell (paragraphs [0088] to [0090]).

In Patent Document 2, as Example 1, "... spinel-type composite oxide powder, i.e. the present core particle powder, was obtained.

The spinel-type composite oxide powder was chemically analyzed, and the result of Li: 4.1 wt%, Ni: 13.3 wt%, Mn: 40.8 wt% and Ti: 5.2 wt% was obtained. That is, the composite oxide has a composition formula of $Li[Li_{0.07}Mn_{1.33}Ni_{0.41}Ti_{0.19}]O_{4-\delta}$, the M1 element corresponds to Ni, and the M2 element corresponds to Ti.

(Production of positive active material)

... the amounts of lithium ethoxide and pentaethoxyniobium were adjusted so that the molar ratio (Li/Nb) of the amount of Li to the amount of Nb was 2.0, and these were added to ethanol and dissolved to prepare a covering sol-gel solution (amount of lithium: 1.5 mmol and amount of niobium: 0.75 mmol). 5 g of the spinel-type composite oxide powder (the present core particle powder) was added to the covering sol-gel solution, the mixture was heated at 60°C for 30 minutes using a rotary evaporator and irradiated with an ultrasonic wave to hydrolyze the mixture, the hydrolysate was then decompressed over 30 minutes while being maintained at 60°C, so that the solvent was removed, and the hydrolysate was then left standing for 16 hours to be dried. Next, ... firing was performed so as to maintain 350°C for 5 hours in an air atmosphere, thereby obtaining a positive active material (sample)" (paragraphs [0090] and [0091]). In addition, according to this document, Example 8, "a positive active material (sample) was obtained in the same manner as in Example 1 except that the amounts of lithium ethoxide and pentaethoxyniobium were changed to those shown in Table 4, and tetra-i-propoxytitanium (Ti $(O-i-C_3H_7)_4$) was added" (paragraph [0096]). Table 4 in this document indicates that in Example 8, 3 mmol of lithium ethoxide, 1.4 mmol of pentaethoxyniobium and 0.1 mmol of tetrapropoxy-i-titanium were used. Further, according to this document, an all-solid-state battery was produced using a positive electrode mixture containing the positive active material obtained in the example and solid electrolyte powder represented by the composition formula: $Li_{5.8}PS_{4.8}Cl_{1.2}$ (paragraphs [0104] to [0106]).

According to Patent Document 3, "(Preparation of first precursor coating liquid)

1 mmol of lithium ethoxide (manufactured by Kojundo Chemical Lab. Co., Ltd.) and 1 mmol of pentaethoxyniobium (manufactured by Kojundo Chemical Lab. Co., Ltd.) were mixed in 20 ml of ethanol (manufactured by Wako Pure Chemical Industries, Ltd.) to obtain a first precursor coating liquid ($LiNbO_3$ precursor sol-gel solution).

(Preparation of second precursor coating liquid)

1 mmol of lithium ethoxide (manufactured by Kojundo Chemical Lab. Co., Ltd.) and 1 mmol of titanium tetraisopropoxide (manufactured by Kojundo Chemical Lab. Co., Ltd.) were mixed in 20 ml of ethanol (manufactured by Wako Pure Chemical Industries, Ltd.) to obtain a second precursor coating liquid ($Li_2Ti_2O_5$ precursor sol-gel solution).

(Formation of lithium ion conduction layer)

A lithium cobalt oxide thin film (positive active material) was formed on an Au substrate by sputtering.... the first precursor coating liquid ... was applied onto a surface of the lithium cobalt oxide thin film, dried, and then fired at 350°C for 0.5 hours to obtain a lithium ion conduction layer having a thickness of 5 nm.

(Formation of stabilization layer)

... the second precursor coating liquid ... was applied onto a surface of the lithium ion conduction layer, dried, and then fired at 350°C for 0.5 hours to obtain a stabilization layer having a thickness of 5 nm.

(Formation of reaction suppressing portion)

By the steps of forming the lithium ion conduction layer and the stabilization layer, a reaction suppressing portion having two layers in which the lithium ion conduction layer is on the active material side and the stabilization layer is on the solid electrolyte side was formed on a surface of the positive active material to obtain an electrode including a positive active material and having the reaction suppressing portion formed on a surface thereof.

(Production of all-solid-state battery)

50 mg of 75 $Li_2S$-25$P_2S_5$ was put in a cylinder in a small cell, and pressed ... with upper and lower pistons ... to form a solid electrolyte. Next, on the solid electrolyte layer, a positive active material layer was formed by similarly pressing the above-described electrode .... Subsequently, on a surface of the solid electrolyte layer on a side opposite to the surface on which the positive active material layer is formed, a negative active material layer was formed by similarly pressing a Li-In foil. In this way, a power generating element was obtained. Next, the bolt of the small cell was fastened, a wire was then connected, and a drying material was put in the glass cell, followed by assemblage to produce an all-solid-state battery." (paragraphs [0098] to [0103]).

In Patent Document 4, as Example 1, "A spherical hydroxide precursor of $Ni_{0.92}Co_{0.08}(OH)_2$ was synthesized by a co-precipitation method....

The hydroxide precursor was mixed together with LiOH as a Li-containing raw material substance and $Al_2O_3$ as an Al-containing raw material substance using a mixer, and in a firing furnace, the mixture was heated at a rate of 1°C per minute, maintained at 350°C for 4 hours, then heated at a rate of 2°C per minute, maintained at a heat treatment temperature of 650°C for 10 hours and then naturally cooled while an $O_2$ atmosphere was maintained. The obtained positive active material was mixed together with a W-containing raw material ($WO_3$) using a mixer. In the firing furnace, the mixture was heated at a rate of 2°C per minute, maintained at a heat treatment temperature of 600°C for 5 hours and then naturally cooled while an $O_2$ atmosphere was maintained. Next, heat treatment and cooling were further performed once under the same conditions as described above. The positive active material produced in Example 1 was confirmed to have a composition formula of $Li_{1.0}Ni_{0.902}Co_{0.079}Al_{0.014}W_{0.005}O_2$" (paragraphs [0100] and [0101]). In addition, according to this document, "a positive active material of Example 7 was produced in the same manner as in Example 1 except that the positive active material was mixed together with a W-containing raw material substance ($WO_3$), a Ti-containing raw material substance ($TiO_2$) and a Zr-containing substance so that the positive active material had a composition formula of $Li_{1.04}Ni_{0.901}Co_{0.078}Al_{0.014}W_{0.005}Ti_{0.001}Zr_{0.001}O_2$" (paragraph [0107]). In addition, the following is a part of this document. "Figs. 10 to 12 are graphs showing the results of XRD analysis on the positive active materials produced in Examples 5 to 7.

Referring to Fig. 12, it can be confirmed that a positive active material having an NCA composition was formed, and also it was confirmed that peaks corresponding to $Li_4WO_5$, $Li_6WO_6$, $LiTiO_2$, $Li_4TiO_4$ and $Li_4ZrO_4$ in the positive

active material were present" (paragraphs [0132] to [0135]). Further, according to this document, a positive electrode was produced using a positive active material produced in each of examples and comparative examples, and an electrolyte solution was injected into a separator interposed between the positive electrode and the negative electrode to produce a lithium secondary battery (paragraphs [0141] to [0143]).

According to Patent Document 5, "(1) Synthesis of coated active material (B-1): oxide Ti-coated NCA

600 mL dehydrated ethanol was added in a 2 L flask, and to this were added 0.26 g (5 mmol) of ethoxylithium, 1.42 g (5 mmol) of titanium tetraisopropoxide and 0.5 g (5 mmol) of acetylacetone. The mixture was stirred in a nitrogen atmosphere to form an LTO ($Li_4Ti_5O_{12}$) sol. To this was added 208 g of NCA ($LiNi_{0.85}Co_{0.10}Al_{0.05}O_2$), and the mixture was stirred at 25°C for 30 minutes in a nitrogen atmosphere. Ethanol was removed under reduced pressure at 50°C, and the obtained powder was then fired at 350°C for 30 minutes, and dried at 120°C for 4 hours to obtain a LTO-coated active material NCA (hereinafter, abbreviated as LTO-coated NCA; the same applies to coated active materials below) as a coated active material (B-1).

(2) Synthesis of coated active material (B-2): oxide Zr-coated NCA

LZO ($Li_2ZrO_3$)-coated NCA was obtained as a coated active material (B-2) in the same manner as in the (1) synthesis of the coated active material (B-1) except that the titanium tetraisopropoxide was replaced by zirconium tetrapropoxide and the dehydrated ethanol was replaced by dehydrated propanol" (paragraph [0124]). In addition, according to this document, a solid electrolyte composition was prepared using a synthesized coated active material, an electrode sheet for a positive electrode for an all-solid-state secondary battery was produced from the solid electrolyte composition, and an all-solid-state secondary battery was produced using the positive electrode sheet (paragraphs [0125] to [0127], [0130] and [0137]).

Patent Document 6 discloses an all-solid-state lithium battery in which a material obtained by covering $LiCoO_2$ as a positive active material with $Li_4Ti_5O_{12}$ is used as a positive electrode.

PRIOR ART DOCUMENTS

PATENT DOCUMENTS

Patent Document 1: JP-W-2020-537319
Patent Document 2: WO 2018/012522
Patent Document 3: WO 2013/046443
Patent Document 4: JP-A-2020-31052
Patent Document 5: WO 2018/043382
Patent Document 6: JP-A-2011-165467

SUMMARY OF THE INVENTION

PROBLEMS TO BE SOLVED BY THE INVENTION

A positive active material including, on a surface of a substance capable of storing and releasing lithium ions, a substance having a different composition or structure has a problem that a battery capacity during high rate discharge significantly decreases in the resulting nonaqueous electrolyte secondary battery.

Even in an energy storage device using conventional active material particles whose surfaces are covered with $Li_4Ti_5O_{12}$ or the like, resistance increases with charge-discharge cycles. Since the power decreases if the resistance of an energy storage device increases, it is desirable that the resistance be unlikely to increase even if charge-discharge is repeated.

The present invention has been made in view of the above circumstances, and an object of the present invention is to provide a positive active material for a nonaqueous electrolyte secondary battery, in which a decrease in battery capacity during high rate discharge is suppressed even though a substance having a different composition or structure is provided on the surface, an electrode for a nonaqueous electrolyte secondary battery in which the positive active material is used, and a nonaqueous electrolyte secondary battery, particularly an all-solid-state secondary battery. Another object of the present invention is to provide an active material particle capable of suppressing an increase in resistance of an energy storage device with charge-discharge cycles, an electrode and an energy storage device using such active material particles, and a method for producing such active material particles. Still another object of the present invention is to provide an energy storage apparatus using the above-mentioned energy storage device, nonaqueous electrolyte secondary battery or all-solid-state secondary battery.

MEANS FOR SOLVING THE PROBLEMS

An active material particle according to an aspect of the present invention includes an active material base material (hereinafter, also referred to as a base material) and a covering layer covering at least a part of a surface of the active material base material (hereinafter, also referred to as a surface layer), in which the covering layer contains a composite oxide containing lithium atoms and titanium atoms, and a molar ratio of a content of the lithium atoms to the titanium atoms in the composite oxide is more than 1 and 4 or less.

A positive active material for a nonaqueous electrolyte secondary battery according to another aspect of the present invention includes a base material including a substance capable of storing and releasing lithium ions, and a surface layer which is present on a surface of the base material, and contains a lithium element, a titanium element, an oxygen element, and at least one element that forms a pentavalent or higher monoatomic cation ($A^2$ element), with the surface layer satisfying $0 < x_2 \leq 0.5$ when a ratio between numbers of moles of the titanium and the $A^2$ element is Ti : $A^2 = (1 - x_2) : x_2$.

A positive active material for a nonaqueous electrolyte secondary battery according to another aspect of the present invention includes a base material including a substance capable of storing and releasing lithium ions, and a surface layer which is present on a surface of the base material, and contains a lithium element, a titanium element, an oxygen element, and at least one element that forms a tetravalent monoatomic cation having an ionic radius of more than 0.0605 nm when a coordination number is 6 ($A^3$ element).

An electrode according to another aspect of the present invention contains the active material particle according to an aspect of the present invention or the positive active material for a nonaqueous electrolyte secondary battery according to an aspect of the present invention, and a solid electrolyte.

An electrode for a nonaqueous electrolyte secondary battery according to another aspect of the present invention includes the positive active material for a nonaqueous electrolyte secondary battery according to an aspect of the present invention.

An energy storage device according to another aspect of the present invention includes the electrode according to an aspect of the present invention.

A nonaqueous electrolyte secondary battery according to another aspect of the present invention includes the electrode according to an aspect of the present invention.

An all-solid-state secondary battery according to another aspect of the present invention includes the electrode and the solid electrolyte according to an aspect of the present invention.

A method for producing active material particles according to an aspect of the present invention includes, in an order presented, covering at least a part of a surface of a particulate active material base material with a coating agent containing lithium atoms and titanium atoms, and heat-treating the active material base material covered with the coating agent, in which a molar ratio of a content of the lithium atoms to the titanium atoms in the coating agent is more than 1 and 4 or less.

An energy storage apparatus according to another aspect of the present invention includes two or more energy storage devices, and one or more of the energy storage devices according to an aspect of the present invention, one or more of the nonaqueous electrolyte secondary batteries according to an aspect of the present invention and/or one or more of the all-solid-state secondary batteries according to an aspect of the present invention.

ADVANTAGES OF THE INVENTION

According to an aspect of the present invention, it is possible to provide a positive active material for a nonaqueous electrolyte secondary battery, which is inhibited from reducing a battery capacity during high rate discharge even though a substance having a different composition or structure is provided on the surface, an electrode for a nonaqueous electrolyte secondary battery using the positive active material, and a nonaqueous electrolyte secondary battery, particularly an all-solid-state secondary battery, and it is also possible to provide an active material particle capable of suppressing an increase in resistance of an energy storage device with charge-discharge cycles, an electrode and an energy storage device using such active material particles, and a method for producing such active material particles. Further, it is possible to provide an energy storage apparatus using the above-mentioned energy storage device, nonaqueous electrolyte secondary battery or all-solid-state secondary battery.

BRIEF DESCRIPTION OF THE DRAWINGS

Fig. 1 is a schematic sectional view of an energy storage device (all-solid-state secondary battery) according to an embodiment of the present invention.

Fig. 2 is a schematic view illustrating an energy storage apparatus configured by aggregating a plurality of energy storage devices according to an embodiment of the present invention.

MODE FOR CARRYING OUT THE INVENTION

First, outlines of an active material particle, an electrode, an energy storage device, a nonaqueous electrolyte secondary battery, an all-solid-state secondary battery, a method for producing active material particles, and an energy storage apparatus, each of which is disclosed in the present specification, will be described.

An active material particle (a) according to an aspect of the present invention contains an active material base material and a covering layer covering at least a part of a surface of the active material base material, the covering layer contains a composite oxide containing lithium atoms and titanium atoms, and a molar ratio of a content of the lithium atoms to the titanium atoms in the composite oxide is more than 1 and 4 or less.

With the active material particle (a), an increase in resistance of the energy storage device with charge-discharge cycles can be suppressed. Although the reason why such an effect is produced is not clear, the following reason is presumed. As shown in Table 1, a composite oxide having lithium ion conductivity, which is used as a material for a film of a conventional active material particle and also used in comparative examples described later, such as $Li_{4/3}Ti_{5/3}O_4$, has a relatively high theoretical density. On the other hand, a composite oxide, which contains lithium atoms and titanium atoms and in which a molar ratio of a content of lithium atoms to titanium atoms (Li/Ti) is more than 1 and 4 or less, has a low theoretical density, where the composite oxide corresponds to $Li_2TiO_3$ and $Li_4TiO_4$ in Table 1. When covering layers having the same mass and the same thickness are formed, a covering layer having a lower density can cover a larger area of the surface of the active material base material, so that the area of exposure of the active material base material can be decreased, resulting in formation of a covering layer with high uniformity. Thus, it is presumed that in the active material particle (a), a covering layer with high uniformity is formed because the theoretical density of the composite oxide is low, so that an increase in resistance of the energy storage device with charge-discharge cycles is suppressed. The theoretical densities described in Table 1 are based on the contents of the crystal structure database "Materials Project" (https://materialsproject.org/).

[Table 1]

| | Li/Me | Theoretical density / $g\,cm^{-3}$ |
|---|---|---|
| $Li_{4/3}Ti_{5/3}O_4$ | 0.8 | 3.38 |
| $LiTiO_2$ | 1 | 4.07 |
| $Li_2TiO_3$ | 2 | 3.34 |
| $Li_4TiO_4$ | 4 | 2.50 |
| $Li_2ZrO_3$ | 2 | 4.03 |
| $LiTaO_3$ | 1 | 7.18 |
| Me = Ti, Zr, Ta | | |

The upper limit of the content of the covering layer with respect to the content of the active material base material is preferably 1.2% by mass, more preferably 0.8% by mass, and still more preferably 0.5% by mass. The lower limit of the content of the covering layer with respect to the content of the active material base material is preferably 0.001% by mass, and more preferably 0.01% by mass. Even if the content of the covering layer is relatively small, the active material particle (a) is capable of sufficiently covering the active material base material, so that it is possible to sufficiently suppress an increase in resistance of the energy storage device with charge-discharge cycles. When the content of the covering layer is equal to or smaller than the upper limit or equal to or greater than the lower limit, the discharge capacity, the charge-discharge efficiency, the capacity retention ratio and the like of the energy storage device tend to increase.

It is preferable that the composite oxide is represented by the following formula 1.

$$Li_{x1}TiO_yA^0_z \dots \qquad 1$$

In the formula 1, $A^0$ represents one or more elements other than Li, Ti and O. $x_1$ is a number of more than 1 and 4 or less. y is a number of more than 2 and 4 or less. z is a number of 0 or more and 1 or less.

In such a case, an increase in resistance of the energy storage device with charge-discharge cycles can be further suppressed.

A positive active material (b) for a nonaqueous electrolyte secondary battery according to another aspect of the present invention includes a base material including a substance capable of storing and releasing lithium ions, and a surface layer which is present on a surface of the base material, and contains a lithium element, a titanium element, an oxygen element, and at least one element that forms a pentavalent or higher monoatomic cation ($A^2$ element), with the surface layer satisfying $0 < x_2 \leq 0.5$ when a ratio between numbers of moles of the titanium and the $A^2$ element is Ti : $A^2 = (1 - x_2) : x_2$. With the positive active material (b) for a nonaqueous electrolyte secondary battery, a nonaqueous electrolyte secondary battery is obtained in which a decrease in battery capacity during high rate discharge is suppressed even though a substance having a different composition or structure is provided on a surface.

A positive active material (c) for a nonaqueous electrolyte secondary battery according to another embodiment of the present invention (hereinafter, also referred to as "the other present embodiment") includes a base material including a substance capable of storing and releasing lithium ions, and a surface layer which is present on a surface of the base material, and contains a lithium element, a titanium element, an oxygen element, and at least one element that forms a tetravalent monoatomic cation having an ionic radius of more than 0.0605 nm when a coordination number is 6 ($A^3$ element). With this positive active material (c) for a nonaqueous electrolyte secondary battery, a nonaqueous electrolyte secondary battery is obtained in which a decrease in battery capacity during high rate discharge is suppressed even though a substance having a different composition or structure is provided on a surface.

An electrode (a) according to another aspect of the present invention contains the active material particle (a) according to an aspect of the present invention or the positive active material (b) for a nonaqueous electrolyte secondary battery according to another aspect of the present invention or the positive active material (c) for a nonaqueous electrolyte secondary battery according to another aspect of the present invention, and a solid electrolyte. Since the electrode (a) contains the active material particle (a) according to an aspect of the present invention or the positive active material (b) for a nonaqueous electrolyte secondary battery according to another aspect of the present invention or the positive active material (c) for a nonaqueous electrolyte secondary battery according to another aspect of the present invention, it is possible to suppress an increase in resistance of the energy storage device with charge-discharge cycles, or a decrease in battery capacity during high rate discharge even though a substance having a different composition or structure is provided on a surface.

An electrode (b) for a nonaqueous electrolyte secondary battery according to another aspect of the present invention includes the positive active material (b) for a nonaqueous electrolyte secondary battery according to another aspect of the present invention or the positive active material (c) for a nonaqueous electrolyte secondary battery according to another aspect of the present invention. Since the electrode (b) contains the positive active material (b) for a nonaqueous electrolyte secondary battery according to another aspect of the present invention or the positive active material (c) for a nonaqueous electrolyte secondary battery according to another aspect of the present invention, it is possible to suppress a decrease in battery capacity of the energy storage device during high rate discharge even though a substance having a different composition or structure is provided on a surface.

An energy storage device according to another aspect of the present invention includes the electrode (a) according to an aspect of the present invention or the electrode (b) for a nonaqueous electrolyte secondary battery according to another aspect of the present invention. Since the energy storage device includes the electrode (a) containing the active material particle (a) according to an aspect of the present invention, or the electrode (b) including the positive active material (b) for a nonaqueous electrolyte secondary battery according to an aspect of the present invention or the positive active material (c) for a nonaqueous electrolyte secondary battery according to another aspect of the present invention, an increase in resistance of the energy storage device with charge-discharge cycles is suppressed, or a decrease in battery capacity during high rate discharge is suppressed even though a substance having a different composition or structure is provided on a surface.

A nonaqueous electrolyte secondary battery according to another aspect of the present invention includes the electrode (a) according to an aspect of the present invention or the electrode (b) for a nonaqueous electrolyte secondary battery according to another aspect of the present invention. Since the nonaqueous electrolyte secondary battery includes the electrode (a) containing the active material particle (a) according to an aspect of the present invention, or the electrode (b) including the positive active material (b) for a nonaqueous electrolyte secondary battery according to an aspect of the present invention or the positive active material (c) for a nonaqueous electrolyte secondary battery according to another aspect of the present invention, an increase in resistance of the energy storage device with charge-discharge cycles is suppressed, or a decrease in battery capacity during high rate discharge is suppressed even though a substance having a different composition or structure is provided on a surface.

An all-solid-state secondary battery according to another aspect of the present invention includes the electrode (a) according to an aspect of the present invention or the electrode (b) for a nonaqueous electrolyte secondary battery according to another aspect of the present invention. Since the all-solid-state secondary battery includes the electrode (a) containing the active material particle (a) according to an aspect of the present invention, or the electrode (b) including the positive active material (b) for a nonaqueous electrolyte secondary battery according to an aspect of the present invention or the positive active material (c) for a nonaqueous electrolyte secondary battery according to another aspect of the present invention, an increase in resistance of the energy storage device with charge-discharge cycles is suppressed, or a decrease in battery capacity during high rate discharge is suppressed even though a substance having a different composition or structure is provided on a surface.

A method for producing active material particles according to an aspect of the present invention includes, in an order presented, covering at least a part of a surface of a particulate active material base material with a coating agent containing lithium atoms and titanium atoms, and heat-treating the active material base material covered with the coating agent, in which a molar ratio of a content of the lithium atoms to the titanium atoms in the coating agent is more than 1 and 4 or less.

The production method enables production of active material particles capable of suppressing an increase in resistance of the energy storage device with charge-discharge cycles.

An energy storage apparatus according to an aspect of the present invention includes two or more energy storage devices, and one or more of the nonaqueous electrolyte energy storage devices, one or more of the nonaqueous electrolyte secondary batteries and/or one or more of the all-solid-state secondary batteries according to an aspect of the present invention. Since the energy storage apparatus includes one or more of the nonaqueous electrolyte energy storage devices, one or more of the nonaqueous electrolyte secondary batteries and/or one or more of the all-solid-state secondary batteries according to an aspect of the present invention, an increase in resistance of the energy storage device with charge-discharge cycles is suppressed, or a decrease in battery capacity during high rate discharge is suppressed even though a substance having a different composition or structure is provided on a surface.

Hereinafter, an active material particle, a method for producing the active material particle, an electrode, an energy storage device, a nonaqueous electrolyte secondary battery, an all-solid-state secondary battery, a method for producing the all-solid-state secondary battery, and an energy storage apparatus according to an embodiment of the present invention, and other embodiments will be described in detail. The names of the respective constituent members (respective constituent elements) used in the respective embodiments may be different from the names of the respective constituent members (respective constituent elements) used in the background art. In the present specification, the term "nonaqueous electrolyte secondary battery" means a secondary battery using an electrolyte free of water. Therefore, the nonaqueous electrolyte secondary battery in the present specification includes all-solid-state secondary batteries using a solid electrolyte, and nonaqueous electrolyte solution secondary batteries using a nonaqueous electrolyte solution obtained by dissolving an electrolyte salt in a solvent other than water (nonaqueous solvent).

<Active material particle>

An active material particle according to an embodiment of the present invention (hereinafter, also referred to as "the present embodiment") includes an active material base material and a covering layer. The active material particle may be positive active material particle used for a positive electrode or a negative active material particle used for a negative electrode, and is preferably a positive active material particles.

(Active material base material)

The active material base material forms a core of the active material. The base material may have a particle shape or a film shape. When the base material has a particle shape, only particles composed of one of the above-described substances may be used, or two or more kinds of particles including different substances may be used in mixture. The active material base material includes an active material. The content of active material in the active material base material may be, for example, 90% by mass or more, 99% by mass or more, or 99.9% by mass or more. The active material base material may be particles composed substantially only of the active material, or particles composed only of the active material. The active material base material may be primary particles composed of single crystals, or secondary particles formed by aggregation of primary particles. When the active material particle according to an embodiment of the present invention is a positive active material particle, the active material is a positive active material, and when the active material particle according to an embodiment of the present invention is a negative active material particle, the active material is a negative active material.

The positive active material can be appropriately selected from known positive active materials usually used for lithium ion secondary batteries and all-solid-state batteries. As the positive active material, a material capable of storing and releasing lithium ions is usually used. Examples of the positive active material include lithium-transition metal composite oxides that have an $\alpha$-NaFeO$_2$-type crystal structure, lithium-transition metal composite oxides that have a spinel-type crystal structure, polyanion compounds, chalcogenides, and sulfur. Examples of the lithium-transition metal composite oxides that have an $\alpha$-NaFeO$_2$-type crystal structure include Li[Li$_x$Ni$_{(1-x)}$]O$_2$ ($0 \leq x < 0.5$), Li[Li$_x$Ni$_y$Co$_{(1-x-y)}$]O$_2$ ($0 \leq x < 0.5$, $0 < y < 1$), Li[Li$_x$Co$_{(1-x)}$]O$_2$ ($0 \leq x < 0.5$), Li[Li$_x$Ni$_y$Mn$_{(1-x-y)}$]O$_2$ ($0 <\_ x < 0.5$, $0 < y < 1$), Li[Li$_x$Ni$_y$Mn$_\beta$Co$_{(1-x-y-\beta)}$]O$_2$ ($0 \leq x < 0.5$, $0 < y$, $0 < \beta$, $0.5 < y + \beta < 1$), and Li[Li$_x$Ni$_y$Co$_\beta$Al$_{(1-x-y-\beta)}$]O$_2$ ($0 \leq x < 0.5$, $0 < y$, $0 < \beta$, $0.5 < y + \beta < 1$). Examples of the lithium-transition metal composite oxides that have a spinel-type crystal structure include Li$_x$Mn$_2$O$_4$ and Li$_x$Ni$_y$Mn$_{(2-y)}$O$_4$. Examples of the polyanion compounds include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F. Examples of the chalcogenides include titanium disulfide, molybdenum disulfide, and molybdenum dioxide. Some of atoms or polyanions in these materials may be substituted with atoms or anion species composed of other elements. Among these substances, lithium transition metal composite oxides having an $\alpha$-NaFeO$_2$-type crystal structure and lithium transition metal composite oxides having a spinel-type crystal structure are preferable because interface resistance to a surface layer described later.

The positive active material is preferably a lithium transition metal composite oxide, more preferably a lithium transition metal composite oxide containing at least one of nickel, cobalt and manganese, still more preferably a lithium transition metal composite oxide containing at least two of nickel, cobalt and manganese, and even more preferably a lithium transition metal composite oxide containing nickel, cobalt and manganese. The lithium transition metal composite oxide preferably has an $\alpha$-NaFeO$_2$-type crystal structure. By using such a lithium transition metal composite oxide, the energy density can be increased, and the like. Among them, lithium transition metal composite oxides having an $\alpha$-NaFeO$_2$-type crystal structure are more preferable in that a nonaqueous electrolyte secondary battery having excellent power characteristics are obtained at low cost. Among them, lithium transition metal composite oxides having an $\alpha$-NaFeO$_2$-type crystal structure and containing Co are particularly preferable in that a nonaqueous electrolyte secondary battery having further excellent power characteristics are obtained.

The lithium transition metal composite oxide is preferably a compound represented by the following formula 2.

$$Li_{1+\alpha}Me_{1-\alpha}O_2 ... \qquad 2$$

In the formula 2, Me is a metal including at least one of Ni, Co and Mn (excluding Li). The condition of $0 \leq \alpha < 1$ is met.

Me in the formula 2 is preferably composed substantially of three elements of Ni, Co and Mn. However, Me may contain other metals.

From the viewpoint of further increasing electric capacity and the like, a preferred content (composition ratio) of each constituent element in the compound represented by the formula 2 is as follows. The molar ratio is equal to the atomic number ratio.

In the formula 2, the lower limit of the molar ratio (Ni/Me) of Ni to Me is preferably 0.1, and more preferably 0.2, 0.3 or 0.4 in some cases. On the other hand, the upper limit of this molar ratio (Ni/Me) is preferably 0.9, and more preferably 0.8, 0.7 or 0.6 in some cases.

In the formula 2, the lower limit of the molar ratio of Co to Me (Co/Me) is preferably 0.05, and more preferably 0.1 or 0.2 in some cases. On the other hand, the upper limit of the molar ratio (Co/Me) is preferably 0.7, and more preferably 0.5, 0.4 or 0.3 in some cases.

In the formula 2, the lower limit of the molar ratio of Mn to Me (Mn/Me) is preferably 0.05, and more preferably 0.1 or 0.2 in some cases. On the other hand, the upper limit of the molar ratio (Mn/Me) is preferably 0.6, and more preferably 0.5, 0.4 or 0.3 in some cases.

In the formula 2, the upper limit of the molar ratio of Li to Me (Li/Me), i.e. $(1+\alpha)/(1-\alpha)$ is preferably 1.6, and more preferably 1.4 or 1.2 in some cases.

A composition ratio of the lithium transition metal composite oxide refers to a composition ratio when a completely discharged state is provided by the following method. First, the energy storage device is subjected to constant current discharge at a current value of 0.05 C to the lower limit voltage in normal use. After the battery is disassembled to take out the positive electrode, a test battery using metal Li as the counter electrode is assembled, constant current discharge is performed at a discharge current of 10 mA per 1 g of a positive active material until the positive potential reaches 3.0 V vs. Li/Li$^+$, and the positive electrode is adjusted to the completely discharged state. The battery is disassembled again, and the positive electrode is taken out. Components (electrolyte and the like) attached on the positive electrode taken out are sufficiently washed off with dimethyl carbonate and is dried at room temperature for 24 hours, and the lithium-transition metal composite oxide of the positive active material is then collected. The collected lithium-transition metal composite oxide is subjected to measurement. The operations of disassembly of the energy storage device through to production of a sample to be measured are performed in an argon atmosphere at a dew point of -60°C or lower.

Examples of suitable lithium transition metal composite oxides include LiNi$_{1/3}$Co$_{1/3}$Mn$_{1/3}$O$_2$, LiNi$_{3/5}$Co$_{1/5}$Mn$_{1/5}$O$_2$, LiNi$_{1/2}$Co$_{1/5}$Mn$_{3/10}$O$_2$, LiNi$_{1/2}$Co$_{3/10}$Mm$_{1/5}$O$_2$, LiNi$_{8/10}$Co$_{1/10}$Mn$_{1/10}$O$_2$.

The negative active material can be appropriately selected from known negative active materials usually used for lithium ion secondary batteries and all-solid-state batteries. As the negative active material, a material capable of storing and releasing lithium ions is usually used. Examples of the negative active material include metal Li; metals or metalloids such as Si and Sn; metal oxides or metalloid oxides such as Si oxide, Ti oxide, and Sn oxide; titanium-containing oxides such as $Li_4Ti_5O_{12}$, $LiTiO_2$, and $TiNb_2O_7$; a polyphosphoric acid compound; silicon carbide; and carbon materials such as graphite and non-graphitic carbon (easily graphitizable carbon or hardly graphitizable carbon). Among these materials, graphite and non-graphitic carbon are preferable.

The term "graphite" refers to a carbon material in which an average grid spacing ($d_{002}$) of a (002) plane determined by X-ray diffraction before charge-discharge or in a discharged state is 0.33 nm or more and less than 0.34 nm. Examples of the graphite include natural graphite and artificial graphite. Artificial graphite is preferable from the viewpoint that a material having stable physical properties can be procured.

The term "non-graphite carbon" refers to a carbon material in which the average grid spacing ($d_{002}$) of a (002) plane determined by X-ray diffraction before charge-discharge or in the discharged state is 0.34 nm or more and 0.42 nm or less. Examples of the non-graphite carbon include hardly graphitizable carbon and easily graphitizable carbon. Examples of the non-graphite carbon include a resin-derived material, a petroleum pitch or a material derived from petroleum pitch, a petroleum coke or a material derived from petroleum coke, a plant-derived material, and an alcohol-derived material.

In this regard, the "discharged state" of the carbon material means a state discharged such that lithium ions that can be stored and released in association with charge-discharge are sufficiently released from the carbon material that is the negative active material. For example, the "discharged state" refers to a state where an open circuit voltage is 0.7 V or more in a monopolar battery in which a negative electrode containing a carbon material as a negative active material is used as a working electrode and metal Li is used as a counter electrode.

The term "hardly graphitizable carbon" refers to a carbon material in which the $d_{002}$ is 0.36 nm or more and 0.42 nm or less.

The term "easily graphitizable carbon" refers to a carbon material in which the $d_{002}$ is 0.34 nm or more and less than 0.36 nm.

The average particle size of the active material base material can be, for example, 0.001 μm or more and 100 μm or less, or 0.01 μm or more and 100 μm or less. The lower limit of the average particle size of the active material base material may be 0.1 μm or 1 μm. The upper limit of the average particle size of the active material base material may be 20 μm or 5 μm. In a case where the negative active material is Si, Sn, an oxide of Si, an oxide of Sn, or the like, the average particle size thereof may be 1 nm or more and 1 μm or less. When the average particle size of the active material base material is equal to or greater than the lower limit, the active material base material is easily produced or handled. When the average particle size of the active material base material is equal to or smaller than the upper limit, a decrease in battery capacity during high rate discharge can be suppressed. In the case where the negative active material is a metal such as metal Li, the active material base material may be in the form of a foil.

The "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher, a classifier, or the like is used to obtain an active material base material with a predetermined particle size. Examples of the crushing method include a method in which a mortar, a ball mill, a sand mill, a vibratory ball mill, a planetary ball mill, a jet mill, a counter jet mill, a whirling airflow type jet mill, a sieve or the like is used. At the time of crushing, wet type crushing in the presence of water or an organic solvent such as hexane can also be used. As a classification method, a sieve, a pneumatic classifier and the like are used both in dry manner and in wet manner if necessary.

(Covering layer)

The covering layer covers at least a part of the surface of the active material base material. The covering layer covers preferably 50% or more, more preferably 70% or more, still more preferably 90% or more, and even more preferably 95% or more of an area of a surface of the active material base material. With the covering layer sufficiently covering a surface of the active material base material, an increase in resistance of the energy storage device with charge-discharge cycles can be further suppressed.

The covering layer contains a composite oxide containing a lithium atom and a titanium atom. The content of the composite oxide in the covering layer is preferably 50% by mass or more, more preferably 70% by mass or more, still more preferably 90% by mass or more, and even more preferably 99% by mass or more. The covering layer may be a layer of the composite oxide. Examples of the component other than the above-described oxides, which may be contained in the covering layer, include oxides other than the above-described oxides, nitrides, sulfides, and halides.

The molar ratio of the content of lithium atoms to titanium atoms (Li/Ti) in the composite oxide contained in the covering layer of the active material particle (a) according to an embodiment of the present invention is more than 1 and 4 or less. The lower limit of the content of lithium atoms to titanium atoms (Li/Ti) is preferably 1.5, and more preferably 2 in some cases. The upper limit of the content of lithium atoms to titanium atoms (Li/Ti) is preferably 3.5, more preferably 3, and still more preferably 2.5 or 2 in some cases. When the content of lithium atoms with respect to titanium atoms (Li/Ti) is equal to or greater than the lower limit or equal to or smaller than the upper limit, a covering layer based on the composite oxide and having high uniformity is more easily formed even if the amount of the composite oxide is relatively small with respect to the active material base material.

The composite oxide may contain atoms other than a lithium atom, a titanium atom and an oxygen atom. Examples of the other atoms include typical nonmetal atoms such as B, C, N, S, P, F, Cl, Br and I, typical metal atoms such as Na, Mg, Al, K, Ca, Zn, Ga, Ge, Sn, Sr and Ba, and transition metal atoms such as Sc, V, Cr, Mn, Fe, Co, Ni, Cu, Mo, Zr, Ta, Hf and W. However, the total content of lithium atoms, titanium atoms and oxygen atoms with respect to all atoms forming the composite oxide is preferably 80 mol% or more, more preferably 90 mol% or more, still more preferably 95 mol% or more, and still more preferably 99 mol% or more. The composite oxide may be composed of a lithium atom, a titanium atom and an oxygen atom.

It is preferable that the composite oxide represented by the following formula 1.

$$\mathrm{Li}_{x_1}\mathrm{TiO}_y\mathrm{A}^0_z \ldots \qquad 1$$

In the formula 1, $A^0$ represents one or more elements other than Li, Ti and O. $x_1$ is a number of more than 1 and 4 or less. $y$ is a number of more than 2 and 4 or less. $z$ is a number of 0 or more and 1 or less.

Examples of $A^0$ in the formula 1 include typical nonmetal elements such as B, N, P, F, Cl, Br and I, typical metal elements such as Na, Mg, Al, K, Ca, Zn, Ga, Ge, Sn, Sr and Ba, and transition metal elements such as Sc, V, Cr, Mn, Fe, Co, Ni, Cu, Mo, Zr, Ta, Hf and W.

In the formula 1, the lower limit of $x_1$ is preferably 1.5, and more preferably 2 in some cases. The upper limit of $x_1$ is preferably 3.5, more preferably 3, and still more preferably 2.5 or 2 in some cases. When $x_1$ is equal to or greater than the lower limit or equal to or smaller than the upper limit, a covering layer based on the composite oxide and having high uniformity is more easily formed even if the amount of the composite oxide is relatively small with respect to the active material base material.

In the formula 1, the lower limit of $y$ is preferably 2.5, and is more preferably 3 in some cases. The upper limit of $y$ is preferably 3.5, and more preferably 3 in some cases. When $y$ is equal to or greater than the lower limit or equal to or smaller than the upper limit, the structure of the composite oxide is stabilized, so that an increase in resistance of the energy storage device with charge-discharge cycles can be further suppressed.

In the formula 1, $z$ is preferably 0.5 or less, more preferably 0.2 or less, still more preferably 0.1 or less, and even more preferably 0. When $z$ is equal to or smaller than the upper limit, the stability of the structure of the composite oxide is enhanced, so that an increase in resistance of the energy storage device with charge-discharge cycles can be further suppressed.

Specific examples of the composite oxide include $Li_2TiO_3$ and $Li_4TiO_4$.

The composite oxide preferably has a crystal structure. In such a case, the stability of the covering layer is enhanced, so that the capacity retention ratio of the energy storage device after charge-discharge cycles can be further increased.

The content of the covering layer with respect to the content of the active material base material may be 0.01% by mass or more and 2% by mass or less. The upper limit of the content of the covering layer with respect to the content of the active material base material is preferably 0.5% by mass, more preferably 0.3% by mass, and still more preferably 0.2% by mass or 0.15% by mass in some cases. With the active material particle, an increase in resistance of the energy storage device with charge-discharge cycles can be sufficiently suppressed even if the content of the covering layer is relatively small as mentioned above. When the content of the covering layer is equal to or smaller than the upper limit, the discharge capacity, the charge-discharge efficiency, the capacity retention ratio after charge-discharge cycles and the like of the energy storage device tend to increase. Further, when the content of the covering layer is equal to or smaller than the upper limit, the content ratio of the active material base material relatively increases, so that the energy density of the energy storage device can be increased. The lower limit of the content of the covering layer with respect to the content of the active material base material is preferably 0.03% by mass, more preferably 0.05% by mass, still more preferably 0.1% by mass, and even more preferably 0.15% by mass in some cases. When the content of the covering layer is equal to or greater than the lower limit, a sufficient amount of the covering layer with respect to the active material base material is formed, so that an increase in resistance of the energy storage device with charge-discharge cycles can be sufficiently suppressed.

The average particle size of the active material particles can be, for example, 0.01 $\mu$m or more and 100 $\mu$m or less. The lower limit of the average particle size of the active material particles may be 1 $\mu$m or 1 $\mu$m. The upper limit of the average particle size of the active material particles may be 20 $\mu$m or 5 $\mu$m.

A surface layer containing a lithium element, a titanium element, an oxygen element, and at least one element that forms a pentavalent or higher monoatomic cation ($A^2$ element) is present on a surface of the base material of the positive active material (b) for a nonaqueous electrolyte secondary battery according to an embodiment of the present invention. This surface layer satisfies $0 < x_2 \leq 0.5$ when a ratio between numbers of moles of titanium and the $A^2$ element is Ti : $A^2 = (1 - x_2) : x_2$. Here, the element that forms a pentavalent or higher monoatomic cation means an element that generates a pentavalent or higher monoatomic cation whose ionic radius has been reported by Schannon et al. (Acta Cryst. A 32 (1976) 751). That is, "a surface layer which is present on a surface of the base material, and contains a lithium element, a titanium element, an oxygen element, and at least one element that forms a pentavalent or higher monoatomic cation ($A^2$ element), with the surface layer satisfying $0 < x_2 \leq 0.5$ when a ratio between numbers of moles of the titanium and the $A^2$ element is Ti : $A^2 = (1 - x_2) : x_2$" can be rephrased as "a surface layer which is present on a surface of the base material, and contains at least one element that generates a pentavalent or higher monoatomic cation whose ionic radius has been reported by Schannon et al. (Acta Cryst. A 32 (1976) 751) ($A^2$ element), with the surface layer satisfying $0 < x_2 \leq 0.5$ when a ratio between numbers of moles of the titanium and the $A^2$ element is Ti : $A^2 = (1 - x_2) : x_2$".

With this surface layer, a decrease in battery capacity during high rate discharge is suppressed even though a substance having a different composition or structure is provided on a surface. This phenomenon is presumed to occur due to the following mechanism of action. The surface layer which contains, as constituent elements, a lithium element, a titanium element, an oxygen element, and at least one element that forms a pentavalent or higher monoatomic cation ($A^2$ element) and satisfies $0 < x_2 \leq 0.5$ when a ratio between numbers of moles of the titanium and the $A^2$ element is Ti : $A^2 = (1 - x_2) : x_2$ contains, as a main component, $Li_2(Ti_{1-x2}A^2_{x2})O_{3+\alpha}$ that is an oxide in which a part of Ti of $Li_2TiO_3$ is substituted with the $A^2$ element. In $Li_2TiO_3$ which does not contain the $A^2$ element, Ti is present only in a positive tetravalent state, whereas in $Li_2(Ti_{1-x2}A^2_{x2})O_{3+\alpha}$, there is the $A^2$ element which is present in a positive pentavalent or higher state and has a larger valence over Ti, and therefore a part of Ti is in a positive trivalent or lower state due to charge compensation. Since Ti in a positive trivalent or lower state is generated, the electron conductivity is enhanced as compared to a case where Ti is present only in a positive tetravalent state, so that resistance in the surface layer is reduced, resulting in suppression of a decrease in battery capacity during high rate discharge. The lower limit of the value of $x_2$ is preferably 0.05 or more, and more preferably 0.10 or more. When the value of $x_2$ is equal to or greater than the lower limit, a decrease in battery capacity during high rate discharge is significantly suppressed. The upper limit of the value of $x_2$ is preferably 0.45 or less, and more preferably 0.40 or less. When the value of $x_2$ is equal to or smaller than the upper limit, generation of a heterogeneous phase such as $LiA^2O_{3+\beta}$ can be effectively suppressed. For these reasons, the value of $x_2$ is preferably 0.05 or more and 0.45 or less, and more preferably 0.10 or more and 0.40 or less.

In addition, a surface layer containing a lithium element, a titanium element, an oxygen element, and at least one element that forms a tetravalent monoatomic cation having an ionic radius of more than 0.0605 nm when the coordination number is 6 ($A^3$ element) is present on a surface of the base material of the positive active material (c) for a nonaqueous electrolyte secondary battery according to an embodiment of the present invention. Here, the at least one element that forms a tetravalent monoatomic cation having an ionic radius of more than 0.0605 nm when the coordination number is 6 means an element for which it has been reported by Schannon et al. (Acta Cryst. A 32 (1976) 751) that a tetravalent monoatomic cation has an ionic radius of more than 0.0605 nm in a 6-coordinated state. That is, "a surface layer which is present on a surface of the base material, and contains lithium, titanium, oxygen, and at least one element that forms a tetravalent monoatomic cation having an ionic radius of more than 0.0605 nm when the coordination number is 6 ($A^3$ element)" can be rephrased as "a surface layer which is present on a surface of the base material, and contains a lithium element, a titanium element, an oxygen element, and an element for which it has been reported by Schannon et al. (Acta Cryst. A 32 (1976) 751) that a tetravalent monoatomic cation has an ionic radius of more than 0.0605 nm in a 6-coordinated state ($A^3$ element)".

With this surface layer, a decrease in battery capacity during high rate discharge is suppressed even though a substance having a different composition or structure is provided on a surface. This phenomenon is presumed to occur due to the following mechanism of action. The surface layer containing, as constituent elements, a lithium element, a titanium element, an oxygen element, and at least one element that forms a tetravalent monoatomic cation having an ionic radius of more than 0.0605 nm when the coordination number is 6 ($A^3$ element) contains, as a main component, $Li_2(Ti_{1-x3}A^3_{x3})O_3$ that is an oxide in which a part of Ti of $Li_2TiO_3$ is substituted with the $A^3$ element. In $Li_2TiO_3$ and $Li_2(Ti_{1-x3}A^3_{x3})O_3$, Ti and the $A^3$ element are located as a tetravalent monoatomic cation in an octahedron having six oxygen atoms at vertices. According to the report by Schannon et al., the radius of the ion of (6-coordinated) positive tetravalent Ti surrounded by the six oxygen atoms is 0.0605 nm. Then, in $Li_2(Ti_{1-x3}A^3_{x3})O_3$, a part of $Ti^{4+}$ is substituted with $A^{4+}$ having a larger ionic radius. It is considered that such substitution with large ions weakens the interaction between $Li^+$ and other ions in the grid to facilitate the movement of $Li^+$, or increases the grid volume to expand the $Li+$ conduction path, so that the lithium ion conductivity of the surface layer is increased, resulting in suppression of a decrease in battery capacity during high rate discharge.

The lower limit of the value of $x_3$ is preferably 0.05 or more, and more preferably 0.1 or more. When the value

of $x_3$ is equal to or greater than the lower limit, a decrease in battery capacity during high rate discharge is significantly suppressed. The upper limit of the value of $x_3$ is preferably 0.9 or less, and more preferably 0.7 or less. When the value of $x_3$ is equal to or smaller than the upper limit, a decrease in battery capacity due to repeated charge-discharge is effectively suppressed. For these reasons, the value of $x_3$ is preferably 0.05 or more and 0.9 or less, and more preferably 0.1 or more and 0.7 or less.

In addition, when the positive active material for a nonaqueous electrolyte secondary battery according to the present embodiment and another embodiment is applied to an all-solid-state secondary battery including a sulfide solid electrolyte (hereinafter, also referred to as a sulfide-based solid electrolyte) as described later, the surface layer exhibits a more beneficial action. It has been reported that in such an all-solid-state secondary battery, the battery capacity decreases due to repeated charge-discharge. This decrease in battery capacity is considered to be caused by a reaction between the positive active material and the solid electrolyte, for example, a substitution reaction between oxygen in the positive active material and sulfur in the solid electrolyte. However, the presence of the surface layer on a surface of the positive active material enables suppression of a decrease in battery capacity due to repeated charge-discharge. This may be because the substitution reaction between oxygen and sulfur is suppressed by the surface layer to inhibit an increase in interface resistance between the positive active material and the sulfide solid electrolyte. The action of suppressing a decrease in battery capacity is significant in a combination of a sulfide solid electrolyte and a base material including a lithium transition metal composite oxide, more significant in a combination of a sulfide solid electrolyte and a base material including a lithium transition metal composite oxide having an $\alpha$-NaFeO$_2$-type crystal structure, and still more significant in a combination of a sulfide solid electrolyte and a base material including a lithium transition metal composite oxide containing cobalt as a transition metal element and having an $\alpha$-NaFeO$_2$-type crystal structure.

The A$^2$ element contained in the surface layer is preferably one or more selected from niobium (Nb), molybdenum (Mo), tantalum (Ta) and tungsten (W). This is because these elements generate a pentavalent or higher monoatomic cation having an ionic radius close to that of Ti$^{4+}$, so that the Li$_2$(Ti$_{1-x2}$A$^2_{x2}$)O$_{3+\alpha}$ is excellent in electrochemical stability.

The surface layer is preferably one represented by the composition formula of Li$_{a2}$(Ti$_{1-x2}$A$^2_{x2}$)$_{b2}$O$_{c2}$ (where A$^2$ is at least one element that forms a pentavalent or higher monoatomic cation, and $a_2$, $b_2$ and $c_2$ are real numbers satisfying $1 < a_2 < 4$, $1 \leq b_2 < 2$ and $2 < c_2 < 4$, respectively). When the surface layer has the composition formula, the content ratio of Li$_2$(Ti$_{1-x2}$A$^2_{x2}$)O$_{3+\alpha}$ increases, so that the effect of suppressing a decrease in battery capacity during high rate discharge becomes significant.

The A$^3$ element contained in the surface layer is preferably one that forms a tetravalent monoatomic cation having an ionic radius of 0.061 nm or more and 0.090 nm or less, more preferably 0.062 nm or more and 0.070 nm or less, when the coordination number is 6. When the ionic radius is the above-described range, a decrease in battery capacity during high rate discharge is further suppressed.

The A$^3$ element contained in the surface layer is preferably one or more selected from zirconium (Zr) and hafnium (Hf). This is because these elements generate a tetravalent monoatomic cation having an ionic radius close to that of Ti$^{4+}$, so that the Li$_2$(Ti$_{1-x3}$A$^3_{x3}$)O$_3$ is excellent in electrochemical stability.

The surface layer is preferably one represented by the composition formula of Li$_{a3}$(Ti$_{1-x3}$A$^3_{x3}$)$_{b3}$O$_{c3}$ (where A$^3$ is at least one element that forms a tetravalent monoatomic cation having an ionic radius of more than 0.0605 nm when the coordination number is 6, and $a_3$, $b_3$, $c_3$ and $x_3$ are real numbers satisfying $1 < a_3 < 4$, $1 \leq b_3 < 2$, $2 < c_3 < 4$ and $0 < x_3 < 1$ respectively). When the surface layer has the composition formula, the content ratio of Li$_2$(Ti$_{1-x3}$A$^3_{x3}$)O$_3$ increases, so that the effect of suppressing a decrease in battery capacity during high rate discharge becomes significant.

Here, the composition of the surface layer in the positive active material for a nonaqueous electrolyte secondary battery is identified by the following procedure. For the positive active material, quantitative analysis of elements is performed with an inductively coupled plasma atomic emission spectroscopy (ICP-AES) analysis apparatus or an X-ray photoelectron spectroscopy (XPS) analysis apparatus to identify the constituent elements and composition of the positive active material. Here, the contents of elements quantifiable by ICP-AES are determined on the basis of the results of the ICP-AES measurement. In the ICP-AES analysis, a positive active material fully dissolved in an acidic solution by a microwave decomposition method is used as an analysis sample. Subsequently, the crystal structure of the surface layer is identified by TEM observation of the surface layer using a method described later. If the surface layer is amorphous, the crystal structure of the surface layer is identified after the positive active material is heat-treated so that the surface layer is crystallized. The composition of the surface layer is presumed from the obtained information, and the presumed composition is taken as the composition of the surface layer.

In the case where a positive electrode active material to be quantitatively analyzed is collected by disassembling the all-solid-state secondary battery, the positive active material is provided by the following method. First, the all-solid-state secondary battery is subjected to constant current discharge at a current value of 0.05 C to the lower limit voltage in normal use. Subsequently, the all-solid-state secondary battery is disassembled to take out the electrode assembly. The surfaces of the electrode assembly and the electrode are observed, and when it is confirmed that the positive active material layer contains a particulate positive active material and the electrode assembly taken out contains a solid electrolyte, the solid electrolyte is removed by immersing the electrode assembly in a solvent in which only the solid electrolyte is dissolved, such as ethanol or ion-exchange water. Subsequently, the binder is removed by immersing the positive active material layer in a solvent in which only the binder is dissolved, such as butyl butylate, and the conductive agent and the positive active material are taken out. Subsequently, the conductive agent and the positive electrode active material are separated by performing decantation using ion-exchange water or the like as a solvent. The obtained positive active material is used as a measurement sample. The surface of the electrode is observed, and when the positive active material layer is confirmed to contain a film-shaped positive active material, the electrode is used directly, or cut to an appropriate size and used a measurement sample. For a sample to be analyzed by XPS, a surface on which the positive active material layer is formed is defined as a measurement surface.

The surface layer is preferably crystalline. When the surface layer is a crystalline material in which atoms or ions are regularly arranged, the surface layer has high electron conductivity, so that a decrease in battery capacity during high rate discharge can be suppressed. In addition, the structural stability of the surface layer is enhanced, so that the capacity retention ratio of the nonaqueous electrolyte secondary battery after charge-discharge cycles can be increased.

Here, whether the covering layer or the surface layer is crystalline is confirmed by the following procedure. A thin sample containing an active material is provided, and observed with a transmission electron microscope (TEM). The electron diffraction of the covering layer or the surface layer of the active material is acquired, and whether a diffraction spot is present is confirmed. When the diffraction spot can be observed, it is determined that the covering layer or the surface layer is crystalline. In the case where the active material to be measured is collected by disassembling the energy storage device, the nonaqueous electrolyte secondary battery or the all-solid-state secondary battery for providing the thin sample, the thin sample is provided by the following method. The energy storage device, the nonaqueous electrolyte secondary battery or the all-solid-state secondary battery is subjected to constant current discharge at a current of 0.05 C to the lower limit voltage discharged at a constant current of 0.05 C to a lower limit voltage in normal use in an environment at 25°C. Subsequently, the energy storage device, the nonaqueous electrolyte secondary battery and the all-solid-state secondary battery is disassembled to take out the electrode assembly. Subsequently, fragments including the active material are collected from the electrode assembly taken out. Subsequently, a portion of the collected fragments, which includes the active material, is processed into a thin sample by a focused ion beam apparatus (FIB), and observed by TEM.

However, in the case where the active material is produced by a method in which any of a coating agent containing lithium atoms and titanium atoms, a solution containing a lithium element, a titanium element and the $A^2$ element, and a solution containing a lithium element, a titanium element, and the $A^3$ element is applied to the base material, and heating is performed, the production conditions are known, and raw materials for producing the active material can be obtained, it may be determined that the covering layer or the surface layer is crystalline by the following procedure. First, a solution prepared in the same procedure as that for the coating agent or the solution applied to the base material is heated under the same conditions as those in the production of the active material to obtain sample powder. Subsequently, the obtained sample powder is subjected to X-ray diffraction measurement. When a peak derived from the crystal structure is observed in the obtained X-ray diffraction diagram, it is determined that the covering layer or the surface layer is crystalline. The X-ray diffraction measurement is performed by the following procedure. First, an X-ray diffraction measurement sample holder is filled with sample powder to be measured. Powder X-ray diffraction measurement is performed using an X-ray diffractometer ("MiniFlex II" from Rigaku Corporation). A CuKα ray is used as a radiation source, a tube voltage is 30 kV, and a tube current is 15 mA. The diffracted X-ray passes through a Kβ filter having a thickness of 30 μm and is detected by a high-speed one-dimensional detector (model number: D/teX Ultra 2). A sampling width is 0.01°, a scanning speed is 5°/min, a divergence slit width is 0.625°, a light receiving slit width is 13 mm (OPEN), and a scattering slit width is 8 mm.

The amount of the surface layer is preferably 0.05% by mass or more, more preferably 0.10% by mass or more, still more preferably 0.15% by mass or more, and even more preferably 0.25% by mass or more with respect to the base material. When the amount of the surface layer is equal to or greater than the lower limit, the chemical or electrochemical stability of the positive active material can be improved to suppress an unintended reaction. On the other hand, the amount of the surface layer is preferably 0.75% by mass or less, more preferably 0.70% by mass or less, still more preferably 0.65% by mass or less, still more preferably 0.60% by mass or less, and still more preferably 0.45% by mass or less with respect to the base material. When the amount of the surface layer is equal to or smaller than the upper limit, a decrease in battery capacity during high rate discharge can be suppressed in the resulting nonaqueous electrolyte secondary battery. For these reasons, the amount of the surface layer is preferably 0.05% by mass or more and 0.75% by mass or less or 0.05% by mass or more and 0.70% by mass or less, more preferably 0.1% by mass or more and 0.65% by mass or less, still more preferably 0.15% by mass or more and 0.60% by mass or less, and even more preferably 0.25% by mass or more and 0.45% by mass or less, with respect to the base material.

It is preferable that the surface layer is present so as to cover the entire surface of the base material in the positive active material (b) for a nonaqueous electrolyte secondary battery according to the present embodiment and the positive active material (c) for a nonaqueous electrolyte secondary battery according to another embodiment. However, even if there is a portion where the base material is exposed, the positive active material for a nonaqueous electrolyte secondary battery exhibits the above-described action when the ratio of the area of the exposed portion to the total surface area of the base material is relatively small, and the exposed portion is not concentrated in a specific region of the base material. As described above, in the case where two or more kinds of base material particles including different substances are used in mixture, at least one kind of base material particles may have a surface layer.

In the case where the base material has a particle shape, the average particle size of the positive active material (b) or the positive active material (c) formed by the base material and the surface layer is, for example, preferably 0.1 $\mu$m or more and 20 $\mu$m or less. When the average particle size of the positive active material (b) or the positive active material (c) is equal to or greater than the lower limit, the positive active material is easily produced or handled. When the average particle size of the active material base material (b) or the positive active material (c) is equal to or smaller than the upper limit, a decrease in battery capacity during high rate discharge can be suppressed. In the case where a composite of the positive active material (b) or the positive active material (c) and another material is used, the average particle size of the composite is regarded as the average particle size of the positive active material (b) or the positive active material (c).

(Application)

The active material particle (a), the positive active material (b) for a nonaqueous electrolyte secondary battery, and the positive active material (c) for a nonaqueous electrolyte secondary battery can be used for various energy storage devices, and can be suitably used for energy storage devices in a solid electrolyte is used, in particular, all-solid energy storage devices. When the active material particle is used for an energy storage device in which a solid electrolyte is used, a good interface is formed between the active material particle and the solid electrolyte, and the effect of suppressing an increase in resistance with charge-discharge cycles is particularly sufficiently exhibited. The active material particle (a), the positive active material (b) for a nonaqueous electrolyte secondary battery, and the positive active material (c) for a nonaqueous electrolyte secondary battery can also be applied to energy storage devices in which a solid electrolyte and an electrolyte solution are used in combination as an electrolyte, energy storage devices in which only an electrolyte solution is used as an electrolyte, and the like.

(Method for producing active material particles)

A method for producing active material particles (a) according to an embodiment of the present invention includes, in an order presented, (1) covering at least a part of a surface of a particulate active material base material with a coating agent containing lithium atoms and titanium atoms, and (2) heat-treating the active material base material covered with the coating agent. The positive active material (b) according to the present embodiment can be suitably produced by a method in which a solution containing a lithium element, a titanium element, and an $A^2$ element is applied to the base material, and heating is then performed. Further, the positive active material (c) according to another embodiment can be suitably produced by a method in which a solution containing a lithium element, a titanium element, and an $A^3$ element is applied to the base material, and heating is then performed.

(1) Covering step

As the particulate active material base material used in this step, a heretofore known active material can be used. For example, the particulate base material can be produced by mixing powdered raw materials at a predetermined ratio and firing the obtained mixture. The powdered raw materials used here may be obtained by a coprecipitation method. The film-shaped base material can be produced by, for example, sputtering using a target having a predetermined composition. Specific examples and suitable examples of the active material base material are the same as the above-described examples of the active material base material of the active material particles according to an embodiment of the present invention.

The coating agent used in the method for producing active material particles (a) contains lithium atoms and titanium atoms. The coating agent may be, for example, a solution including a solute and a solvent. The lithium atoms and titanium atoms are normally contained in the solute component of the coating agent. The molar ratio of the content of lithium atoms to titanium atoms in the coating agent is more than 1 and 4 or less. The suitable range of the content of lithium atoms with respect to titanium atoms in the coating agent is the same as that of the content of lithium atoms with respect to titanium atoms in the oxide.

The coating agent can be prepared by, for example, dissolving a lithium-containing compound and a titanium-containing compound as solutes in a solvent. A compound containing lithium atoms and titanium atoms may be used as the solute. Examples of the lithium-containing compound include lithium alkoxides such as lithium ethoxide and lithium methoxide, lithium acetate, and lithium hydroxide. Examples of the titanium-containing compound include titanium alkoxides such as titanium (IV) ethoxide, titanium (IV) methoxide and titanium (IV) isopropoxide. The mixing ratio of the components is appropriately set according to a desired composition of the composite oxide. The solvent used for the coating agent is not particularly limited as long as it is a solvent in which the lithium-containing compound and the titanium-containing compound can be dissolved, and for example, an alcohol such as ethanol can be used.

The solution containing a lithium element, a titanium element, and the $A^2$ element or the $A^3$ element can be prepared by, for example, dissolving a lithium-containing compound, a titanium-containing compound, and an $A^2$ element-containing compound or an $A^3$ element-containing compound in a solvent. A compound containing two or more of lithium, titanium and the $A^2$ element or the $A^3$ element may be used. Examples of the lithium-containing compound include lithium alkoxides such as lithium methoxide and lithium ethoxide, lithium acetate, and lithium hydroxide. Examples of the titanium-containing compound include titanium alkoxides such as titanium (IV) methoxide, titanium (IV) ethoxide, titanium (IV) tetraisopropoxide and titanium (IV) tetrabutoxide. Examples of the $A^2$ element-containing compound include niobium alkoxides such as niobium (V) ethoxide and niobium (V) methoxide, niobium acetate and niobium hydroxide which are niobium-containing compounds, molybdenum alkoxides such as molybdenum (V) isopropoxide which are molybdenum-containing compounds, tantalum alkoxides such as tantalum (V) methoxide and tantalum (V) ethoxide which are tantalum-containing compounds, and tungsten alkoxides such as tungsten (VI) ethoxide which are tungsten-containing compounds. Examples of the $A^3$ element-containing compound include zirconium alkoxides such as zirconium (IV) ethoxide, zirconium (IV) propoxide and zirconium (IV) isopropoxide which are zirconium-containing compounds, and hafnium alkoxides such as hafnium (IV) ethoxide and hafnium (IV) isopropoxide monoisopropylate which are hafnium-containing compounds. The mixing ratio of the components is appropriately set according to a desired composition of the surface layer. The solvent used for the solution is not particularly limited as long as it is a solvent in which the lithium-containing compound, the titanium-containing compound and the $A^2$ element or the $A^3$ element can be dissolved, and for example, ethanol can be used.

A surface of the active material base material can be covered with the coating agent or the solution by, for example, a heretofore known coating method such as spin coating, dip coating or rolling fluidized coating, and a method can be suitably used in which the solution is sprayed while powder including the base material is fluidized. The method enables the solution to be uniformly applied to the surface of the particulate base material. Among these method, rolling fluidized coating is preferable because a covering layer having high homogeneity is easily obtained. The rolling fluidized coating is a coating method in which an active material base material is brought into a rolling fluidized state, and a coating agent or a solution is sprayed to the active material base material in the rolling fluidized state, and dried (to remove the solvent). The temperature of the inside of a rolling fluidized coating apparatus when rolling fluidized coating is performed can be, for example, 60°C or higher and 120°C or lower. Depending on a covering method, a step of drying the coating agent or the solution (step of removing the solvent) may be provided separately from the step of covering the base material with the coating agent or the solution. In the case where the base material has a film shape, spin coating, bar coating, spray coating or the like can be suitably used.

The covering step by rolling fluidized coating or the like may be carried out in an atmosphere of an inert gas such as nitrogen or argon, or in an air atmosphere. The amount (coating amount) of the coating agent or the solution used for the covering can be appropriately adjusted according to an amount of the covering layer formed.

(2) Heat treatment step

In the present step, the active material base material covered with the coating agent or the solution is heat-treated. In a state before the heat treatment is performed, the coating agent or the solution may be present on the surface of the active material base material in a dry state (a state after the solvent is removed, or a state in which there is only a solute). In the heat treatment step, the coating agent or the solution may be dried (to remove the solvent). Through this heat treatment, the active material particle (a) on which a covering layer containing lithium atoms, titanium atoms, oxygen atoms and optional other atoms is formed, the positive active material (b) for a nonaqueous electrolyte secondary battery on which a surface layer containing a lithium element, a titanium element, an oxygen element, the $A^2$ element and optional other elements is formed, or the positive active material (c) for a nonaqueous electrolyte secondary battery on which a surface layer containing a lithium element, a titanium element, an oxygen element, the $A^3$ element and optional other elements is formed are obtained.

The heat treatment is performed preferably in an atmosphere containing oxygen, and may be performed in, for example, an air atmosphere. The lower limit of the heat treatment temperature is, for example, preferably 250°C, more preferably 300°C, and still more preferably 350°C. The upper limit of the heat treatment temperature is preferably 600°C, more preferably 550°C, still more preferably 500°C, and still more preferably 450°C. The lower limit of the heat treatment time is preferably 1 minute, more preferably 10 minutes, and still more preferably 15 minutes. The upper limit of the heat treatment time is preferably 10 hours, more preferably 4 hours, still more preferably 2 hours, and even more preferably 1 hour.

<Electrode>

The electrode (a) according to an embodiment of the present invention contains the active material particle (a), the positive active material (b) for a nonaqueous electrolyte secondary battery or the positive active material (c) for a nonaqueous electrolyte secondary battery according to an embodiment of the present invention, and a solid electrolyte. The electrode (a) includes a substrate and an active material layer disposed directly on the negative electrode substrate or over the substrate with an intermediate layer interposed therebetween. The electrode (a) may be a positive electrode or a negative electrode, and is preferably a positive electrode. An electrode (b) according to another embodiment of the present invention contains the positive active material (b) for a nonaqueous electrolyte secondary battery or the positive active material (c) for a nonaqueous electrolyte secondary battery according to an embodiment of the present invention. The electrode (b) has a positive electrode substrate and a positive active material layer disposed directly on the positive electrode substrate or over the positive electrode substrate with an intermediate layer interposed therebetween.

(Substrate)

The substrate has conductivity. Whether the positive electrode substrate has "conductivity" is determined by the volume resistivity of $10^7 \, \Omega \cdot$cm measured in conformity with JIS-H-0505 (1975) as a threshold.
As the material of the substrate (positive electrode substrate) in the case where the electrode is a positive electrode, a metal such as aluminum, titanium, tantalum, or stainless steel, or an alloy thereof is used. Among these, aluminum or an aluminum alloy is preferable from the viewpoint of electric potential resistance, high conductivity, and costs. Examples of the positive electrode substrate include a foil, a deposited film, a mesh, and a porous material, and a foil is preferable from the viewpoint of cost. Accordingly, the positive electrode substrate is preferably an aluminum foil or an aluminum alloy foil. Examples of the aluminum or aluminum alloy include A1085, A3003, and A1N30 specified in JIS-H-4000 (2014) or JIS-H-4160 (2006).
The average thickness of the positive electrode substrate is preferably 3 pm or more and 50 pm or less, more preferably 5 pm or more and 40 pm or less, still more preferably 8 pm or more and 30 pm or less, particularly preferably 10 pm or more and 25 pm or less. When the average thickness of the positive electrode substrate is within the above-described range, it is possible to increase the energy density per volume of the energy storage device while increasing the strength of the positive electrode substrate. The "average thickness" of the positive electrode substrate and the negative electrode substrate described below refers to a value obtained by dividing a cutout mass in cutout of a substrate that has a predetermined area by a true density and a cutout area of the substrate.
As the material of the substrate (negative electrode substrate) in the case where the electrode is a negative electrode, a metal such as copper, nickel, stainless steel, nickel-plated steel, or aluminum, an alloy thereof, a carbonaceous material, or the like is used. Among these metals and alloys, copper or a copper alloy is preferable. Examples of the negative electrode substrate include a foil, a deposited film, a mesh, and a porous material, and a foil is preferable from the viewpoint of cost. Accordingly, the negative electrode substrate is preferably a copper foil or a copper alloy foil. Examples of the copper foil include a rolled copper foil and an electrolytic copper foil.
The average thickness of the negative electrode substrate is preferably 2 pm or more and 35 pm or less, more preferably 3 pm or more and 30 pm or less, still more preferably 4 pm or more and 25 pm or less, particularly preferably 5 pm or more and 20 pm or less. When the average thickness of the negative electrode substrate falls within the above-described range, it is possible to increase the energy density per volume of the energy storage device while increasing the strength of the negative electrode substrate.

(Intermediate layer)

The intermediate layer is a layer arranged between the substrate and the active material layer. The intermediate layer contains a conductive agent such as carbon particles to reduce contact resistance between the substrate and the active material layer. The configuration of the intermediate layer is not particularly limited, and includes, for example, a binder and a conductive agent.

(Active material layer)

The active material layer of the electrode (a) according to an embodiment of the present invention contains the active material particle (a), the positive active material (b) for a nonaqueous electrolyte secondary battery or the positive active material (c) for a nonaqueous electrolyte secondary battery according to an embodiment of the present invention, and a solid electrolyte. The positive active material of the electrode (b) according to another embodiment of the present invention contains the positive active material (b) for a nonaqueous electrolyte secondary battery or the positive active material (c) for a nonaqueous electrolyte secondary battery according to an embodiment of the present invention. The active material layer contains optional components such as a conductive agent, a binder, a thickener, a filler, or the like as necessary. The active material layer may be formed from a composite (positive composite or negative composite) containing active material particles and the like.

In the active material layer (positive active material layer) when the electrode is a positive electrode, positive active material particles are used as active material particles. In the active material layer (negative active material layer) when the electrode is a negative electrode, negative active material particles are used as active material particles. The content of the active particles in the active material layer is preferably 30% by mass or more and 99% by mass or less, more preferably 50% by mass or more and 98% by mass or less, still more preferably 60% by mass or more and 95% by mass or less, and even more preferably 70% by mass or more, 80% by mass or more or 90% by mass or more in some cases. When the content of the active material particles is in the above-described range, it is possible to achieve both high energy density and productivity of the energy storage device.

When the active material layer contains a solid electrolyte, a heretofore known solid electrolyte can be used as the solid electrolyte. Examples of the solid electrolyte include sulfide-based solid electrolytes, oxide-based solid electrolytes, oxynitride solid electrolytes, dry polymer electrolytes, gel polymer electrolytes, and pseudo solid electrolytes, and the sulfide-based solid electrolytes are preferable.

Examples of the sulfide-based solid electrolyte include $Li_2S-P_2S_5$, $Li_2S-P_2S_5-LiI$, $Li_2S-P_2S_5-LiCl$, $Li_2S-P_2S_5-LiBr$, $Li_2S-P_2S_5-Li_2O$, $Li_2S-P_2S_5-Li_2O-LiI$, $Li_2S-P_2S_5-Li_3N$, $Li_2S-SiS_2$, $Li_2S-SiS_2-LiI$, $Li_2SSiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_{2n}$ (where m and n are positive numbers, and Z is any of Ge, Zn, and Ga), $Li_2S-GeS_2$, $Li_2S-SiS_2-Li_3PO_4$, $Li_2S-SiS_2-Li_xMO_y$ (where that x and y are positive numbers, and M is any of P, Si, Ge, B, Al, Ga, and In), and $Li_{10}GeP_2S_{12}$. The solid electrolyte contained in the active material layer may be identical to or different from that contained in a isolation layer described later.

When the active material layer contains a solid electrolyte, the content of the solid electrolyte in the active material layer is preferably 10% by mass or more and 90% by mass or less, more preferably 20% by mass or more and 70% by mass or less, and still more preferably 25% by mass or more and 50% by mass or less in some cases. When the content of the solid electrolyte is in the above-described range, the electric capacity of the energy storage device can be increased.

In the active material layer, the active material particles and the solid electrolyte may form a composite. Examples of the composite of the positive active material particles and the solid electrolyte include composites having a chemical or physical bond between positive active material particles and a solid electrolyte or the like, and composites obtained by mechanically combining positive active material particles and a solid electrolyte or the like. The composite has active material particles, a solid electrolyte and the like in one particle, and examples thereof include those in which active material particles, a solid electrolyte and the like form an aggregated state, and those in which a film containing a solid electrolyte or the like is formed on at least a part of a surface of an active material particle.

The conductive agent is not particularly limited as long as it is a material exhibiting electrical conductivity. Examples of such a conductive agent include carbonaceous materials, metals, and conductive ceramics. Examples of the carbonaceous materials include graphite, non-graphitic carbon, and graphene-based carbon. Examples of the non-graphite carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the shape of the conductive agent include a powdery shape and a fibrous shape. As the conductive agent, one of these materials may be used singly, or two or more thereof may be used in mixture. These materials may be composited and used. For example, a material obtained by compositing carbon black with CNT may be used. Among these materials, carbon black is preferable from the viewpoint of electron conductivity, and in particular, acetylene black is preferable.

The content of the conductive agent in the active material layer is preferably 1% by mass or more and 10% by mass or less, and more preferably 3% by mass or more and 9% by mass or less. When the content of the conductive agent is in the above-described range, the energy density of the energy storage device can be increased.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the active material layer is preferably 1% by mass or more and 10% by mass or less, more preferably 3% by mass or more and 9% by mass or less. When the content of the binder is in the above-described range, the active material particles can be stably held.

Examples of the thickener include polysaccharide polymers such as carboxymethylcellulose (CMC) and methylcellulose. In a case where the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the active material particle, the solid electrolyte, the conductive agent, the binder, the thickener, and the filler.

An average thickness of the active material layer is preferably 10 pm or more and 1,000 pm or less, and more preferably 30 pm or more and 500 pm or less. When the average thickness of the active material layer is equal to or greater than the lower limit, an energy storage device having a high energy density can be obtained. When the average thickness of the active material layer is equal to or smaller than the upper limit, the size of the energy storage device can be reduced. The average thickness of the active material layer is regarded as an average value of thicknesses measured at any five points. The same applies to the average thickness of the isolation layer described later.

<Energy storage device>

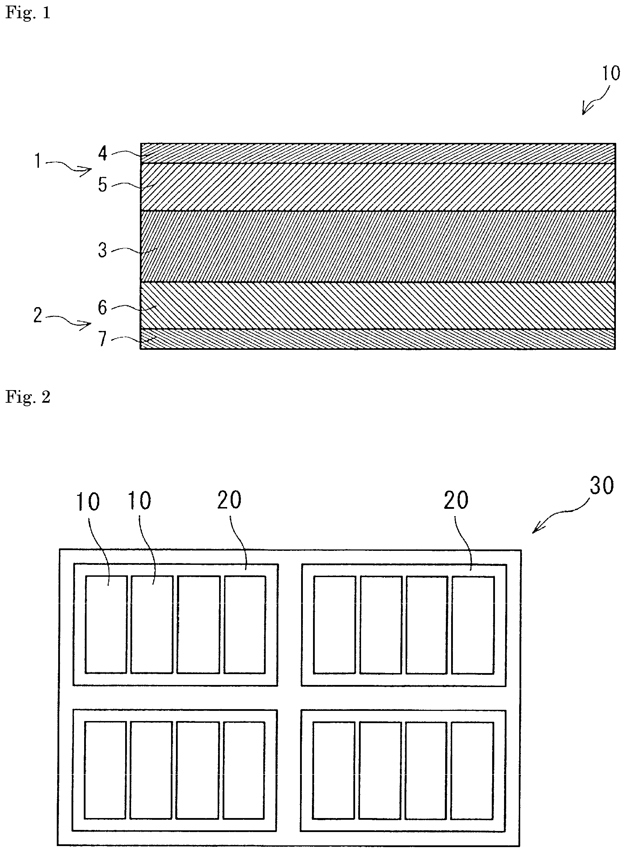

The energy storage device (hereinafter, also referred to as a nonaqueous electrolyte secondary battery, or referred to simply as a "secondary battery") according to an embodiment of the present invention includes an electrode assembly including a positive electrode, a negative electrode and an isolation layer, and a case which houses the electrode assembly. In the case where the nonaqueous electrolyte secondary battery is an all-solid-state secondary battery including only a solid electrolyte as a nonaqueous electrolyte, the solid electrolyte forms the isolation layer. On the other hand, in the case where the nonaqueous electrolyte secondary battery contains a liquid nonaqueous electrolyte, the isolation layer includes a separator, and the nonaqueous electrolyte is present in a state of being contained in the electrode assembly. Normally, the electrode assembly is of layered type in which a plurality of positive electrodes and a plurality of negative electrodes are stacked with isolation layers interposed between the positive electrodes and the negative electrodes, respectively, or the electrode assembly is of winding type in which a positive electrode and a negative electrode are stacked in a state of being wound with an isolation layer interposed therebetween. In addition, in the case where the isolation layer includes a solid electrolyte, the electrode assembly may be of so-called "bipolar type" in which a positive active material layer is formed on one surface of the substrate and a negative active material layer is formed on the other surface of the substrate. Hereinafter, an all-solid-state battery will be described as a specific example. An energy storage device 10 of Fig. 1 is an all-solid-state secondary battery, and is a secondary battery in which a positive electrode 1 and a negative electrode 2 are arranged with an isolation layer 3 interposed therebetween. The positive electrode 1 includes a positive electrode substrate 4 and a positive active material layer 5, and the positive electrode substrate 4 is an outermost layer of the positive electrode 1. The negative electrode 2 includes a negative electrode substrate 7 and a negative active material layer 6, and the negative electrode substrate 7 is an outermost layer of the negative electrode 2. In the energy storage device 10 shown in Fig. 1, the negative active material layer 6, the isolation layer 3, the positive active material layer 5, and the positive electrode substrate 4 are stacked in this order on the negative electrode substrate 7. At least one of the positive electrode 1 and the negative electrode 2 in the energy storage device 10 is an electrode according to an embodiment of the present invention.

(Positive electrode)

The positive electrode 1 includes a positive electrode substrate 4 and a positive active material layer 5 disposed directly on the positive electrode substrate 4 or over the positive electrode substrate with an intermediate layer interposed therebetween. In an embodiment of the present invention, when the electrode according to an embodiment of the present invention is used as the positive electrode 1, the specific forms and suitable forms of the positive electrode substrate 4 and the positive active material layer 5 of the positive electrode 1 are as described above as the substrate (positive electrode substrate) and the active material layer (positive active material layer) provided in the electrode according to an embodiment of the present invention.

As another embodiment of the present invention, when the electrode according to an embodiment of the present invention is used as the negative electrode 2, the positive electrode 1 may be a heretofore known positive electrode. Examples of the positive electrode 1 include positive electrodes that are the same as the electrode (positive electrode) according to an embodiment of the present invention except that heretofore known positive active material particles are used as active material particles.

(Negative electrode)

The negative electrode 2 has a negative electrode substrate 7 and a negative active material layer 6 disposed on the negative electrode substrate 7 directly or with an intermediate layer interposed therebetween. In an embodiment of the present invention, when the electrode according to an embodiment of the present invention is used as the negative electrode 2, the specific forms and suitable forms of the negative electrode substrate 7 and the negative active material layer 6 of the negative electrode 2 are as described above as the substrate (negative electrode substrate) and the active material layer (negative active material layer) provided in the electrode according to an embodiment of the present invention.

As another embodiment of the present invention, when the electrode according to an embodiment of the present invention is used as the positive electrode 1, the negative electrode 2 may be a heretofore known negative electrode. Examples of the negative electrode 2 include negative electrodes that are the same as the electrode (negative electrode) according to an embodiment of the present invention except that heretofore known negative active material particles are used as active material particles. In another embodiment, the negative active material layer 6 may be a layer composed substantially of only metal lithium. In this case, the content of lithium in the negative active material layer 6 may be 90% by mass or more, may be 99% by mass or more, or may be 100% by mass. The negative active material layer 6 may be a metal lithium foil or a lithium alloy foil.

(Isolation layer)

The isolation layer 3 normally contains a solid electrolyte. As the solid electrolyte contained in the isolation layer 3, the heretofore known solid electrolyte described above can be used, and examples of the solid electrolyte include a sulfide solid electrolyte, an oxide solid electrolyte, an oxynitride solid electrolyte, and a polymer solid electrolyte. Among them, a sulfide-based solid electrolyte is preferable from the viewpoint that an interface between the positive active material and the negative active material is easily formed because ionic conductivity is high and plastic strain easily occurs. The content of the solid electrolyte in the isolation layer 3 is preferably 70% by mass or more, more preferably 90 by mass or more%, still more preferably 99% by mass or more, and even more preferably substantially 100% by mass in some cases.

The isolation layer 3 may contain a solid electrolyte, a phosphoric acid compound such as $Li_3PO_4$, an oxide, a halogen compound, and optional components such as a binder, a thickener and a filler. The optional components such as a binder, a thickener and a filler can be selected from the materials exemplified as the components in the active material layer.

The lower limit of the average thickness of the isolation layer 3 is preferably 1 pm, and more preferably 3 pm. The upper limit of the average thickness of the isolation layer 3 is preferably 200 pm, preferably 100 pm, preferably 50 pm, and more preferably 20 pm. When the average thickness of the isolation layer 3 is equal to or greater than the lower limit, the positive electrode 1 and the negative electrode 2 can be insulated with high reliability. When the average thickness of the isolation layer 3 is equal to or smaller than the upper limit, the energy density of the energy storage device 10 can be increased.

In the case where the nonaqueous electrolyte secondary battery is a nonaqueous electrolyte solution secondary battery including a liquid nonaqueous electrolyte, the isolation layer includes a separator. The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining properties of the nonaqueous electrolyte. As the material for the substrate layer of the separator, for example, a polyolefin such as polyethylene or polypropylene is preferable from the viewpoint of shutdown function, and polyimide, aramid or the like is preferable from the viewpoint of resistance to oxidation and decomposition. As the substrate layer of the separator, a material obtained by combining these resins may be used.

The heat resistant particles contained in the heat resistant layer preferably have a mass loss of 5% or less when the temperature is raised from room temperature to 500°C in an air atmosphere at 1 atm, and more preferably have a mass loss of 5% or less when the temperature is raised from room temperature to 800°C. Inorganic compounds can be mentioned as materials whose mass loss is equal to or less than the predetermined value. Examples of the inorganic compounds include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite and mica, and artificial products thereof. As the inorganic compounds, a simple substance or a complex of these substances may be used singly, or two or more thereof may be used in mixture. Among these inorganic compounds, silicon oxide, aluminum oxide, or aluminosilicate is preferable from the viewpoint of safety of the nonaqueous electrolyte secondary battery.

A porosity of the separator is preferably 80% by volume or less from the viewpoint of strength, and is preferably 20% by volume or more from the viewpoint of discharge performance. The term "porosity" herein is a volume-based value, and means a value measured using a mercury porosimeter.

As the separator, a polymer gel composed of a polymer and a nonaqueous electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel affords the effect of suppressing liquid leakage. As the separator, a polymer gel may be used in combination with a porous resin film, a nonwoven fabric, or the like as described above.

<Method for producing energy storage device>

The energy storage device according to an embodiment of the present invention can be produced by a heretofore known method. In the case of the energy storage device 10 which is the above-described all-solid-state battery, for example, the method includes: (1) providing a positive composite by mixing a positive active material and a solid electrolyte for a positive active material layer; (2) providing a material for an isolation layer (hereinafter, also referred to as a solid electrolyte for an isolation layer); (3) providing a negative composite by mixing a negative active material and a solid electrolyte for a negative active material layer; and (4) stacking a positive electrode, an isolation layer and a negative electrode, that is, disposing the positive composite, the negative composite and the solid electrolyte for an isolation layer in a layered manner so as to sandwich the solid electrolyte for an isolation layer between the positive composite and the negative composite, and laminating the solid electrolyte for an isolation layer, followed by lamination together with a substrate.

(1) Step of providing positive composite

In this step, a positive composite for forming a positive active material layer is usually produced. A method of producing the positive composite is not particularly limited, and can be appropriately selected according to the purpose. Examples thereof include a mechanical milling treatment of a material of the positive composite, and compression molding of a material of the positive composite. When the positive composite contains a mixture or a composite containing positive active material particles and a solid electrolyte, this step can include mixing the positive active material particles and the solid electrolyte using, for example, a mechanical milling method or the like to produce a mixture or a composite of the positive active material particles and the solid electrolyte.

(2) Step of providing material for isolation layer

In the present step, normally, a material for an isolation layer for forming the isolation layer is produced. The material for an isolation layer can be normally a solid electrolyte. The solid electrolyte as the material for an isolation layer can be produced by a heretofore known method. For example, predetermined materials can be obtained by a mechanical milling method. The material for the isolation layer may be produced by heating predetermined materials to a melting temperature or higher by a melt quenching method to melt and mix the materials at a predetermined ratio, and quenching the mixture. Examples of other methods of synthesizing the material for the isolation layer include a solid phase method of sealing under reduced pressure and firing, a liquid phase method such as dissolution precipitation, a gas phase method (PLD), and firing under an argon atmosphere after mechanical milling.

(3) Step of providing negative composite

In the present step, normally, a negative composite for forming a negative active material layer is produced. A specific method of producing the negative composite is the same as that for the positive composite.

(4) Stacking step

In the present step, for example, a positive electrode including a positive electrode substrate and a positive active material layer, an isolation layer, and a negative electrode including a negative electrode substrate and a negative active material layer are stacked. In this step, the positive electrode, the isolation layer and the negative electrode may be sequentially formed in this order, or vice versa, and the order of formation of each layer is not particularly limited.

The positive electrode is formed, for example, by pressure-molding a positive electrode substrate and a positive composite, the isolation layer is formed by pressure-molding the material for the isolation layer, and the negative electrode is formed by pressure-molding a negative electrode substrate and a negative composite. The positive electrode, the isolation layer, and the negative electrode may be stacked by pressure-molding the positive electrode substrate, the positive composite, the material for the isolation layer, the negative composite, and the negative electrode substrate at a time. The positive electrode and the negative electrode may be each formed in advance, and stacked by pressure-molding with the isolation layer.

When the nonaqueous electrolyte is a nonaqueous electrolyte solution secondary battery including a nonaqueous electrolyte solution, the method for producing a nonaqueous electrolyte secondary battery includes providing an electrode assembly, providing a nonaqueous electrolyte, and housing the electrode assembly and the nonaqueous electrolyte in a case. The provision of the electrode assembly includes: providing a positive electrode and a negative electrode, and forming an electrode assembly by stacking or winding the positive electrode and the negative electrode with a separator interposed therebetween.

Housing of the nonaqueous electrolyte in a case can be appropriately selected from known methods. For example, in a case where a nonaqueous electrolyte solution is used for the nonaqueous electrolyte, the nonaqueous electrolyte solution may be injected from the inlet formed in the case, and then the inlet may be sealed.

<Energy storage apparatus>

The energy storage device, the nonaqueous electrolyte secondary battery and the all-solid-state secondary battery according to an embodiment of the present invention can be mounted as an energy storage unit (battery module) configured by assembling a plurality of energy storage devices, nonaqueous electrolyte secondary batteries or all-solid-state secondary batteries on a power source for automobiles such as electric vehicles (EV), hybrid vehicles (HEV), and plug-in hybrid vehicles (PHEV), a power source for electronic devices such as personal computers and communication terminals, or a power source for power storage, or the like. In this case, the technique of the present invention may be applied to at least one energy storage device, nonaqueous electrolyte secondary battery or all-solid-state secondary battery in the energy storage unit.

The energy storage apparatus according to an embodiment of the present invention is an energy storage apparatus including two or more energy storage devices, and one or more of the energy storage devices, one or more of the nonaqueous electrolyte secondary batteries and/or one or more of the all-solid-state secondary batteries according to an embodiment of the present invention. Fig. 2 shows an example of an energy storage apparatus 30 formed by assembling energy storage units 20 in each of which two or more electrically connected energy storage devices 10 are assembled. The energy storage apparatus 30 may include a busbar (not illustrated) for electrically connecting two or more energy storage devices 10, a busbar (not illustrated) for electrically connecting two or more energy storage units 20, and the like. The energy storage unit 20 or the energy storage apparatus 30 may include a state monitor (not illustrated) for monitoring the state of one or more energy storage devices 10.

<Other embodiments>

The present invention is not limited to the above embodiments, and various modifications may be made without departing from the gist of the present invention. For example, to the configuration of one embodiment, the configuration of another embodiment can be added, and a part of the configuration of one embodiment can be replaced by the configuration of another embodiment or a well-known technique. Furthermore, part of the configuration of one embodiment can be deleted. In addition, a well-known technique can be added to the configuration of one embodiment.

In the embodiments described above, the energy storage device is an all-solid-state battery that can be charged and discharged, but the type, shape, size, capacity and the like of the energy storage device are not limited. The present invention can also be applied to various secondary batteries, and capacitors such as electric double layer capacitors and lithium ion capacitors. For example, the energy storage device according to the present invention may include a layer other than the positive electrode, the isolation layer, and the negative electrode. The structures of the positive electrode, the isolation layer and the negative electrode are not limited to the above-described structures. In the energy storage device according to the present invention, one or more of layers may contain a liquid. The active material particle (a), the positive active material (b), the positive electrode active material (c), the electrode (a) and the electrode (b) according to the present invention may be applied to a nonaqueous electrolyte solution energy storage device.

(Nonaqueous electrolyte solution)

When the nonaqueous electrolyte is a liquid nonaqueous electrolyte solution, the nonaqueous electrolyte solution contains a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, those in which some hydrogen atoms contained in these compounds are substituted with halogen may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these, EMC is preferable.

As the nonaqueous solvent, it is preferable to use the cyclic carbonate or the chain carbonate, and it is more preferable to use the cyclic carbonate and the chain carbonate in combination. By using a cyclic carbonate, dissociation of the electrolyte salt can be promoted to improve ionic conductivity of the nonaqueous electrolyte solution. By using a chain carbonate, the viscosity of the nonaqueous electrolyte solution can be kept low. In a case where a cyclic carbonate and a chain carbonate are used in combination, a volume ratio of the cyclic carbonate to the chain carbonate (cyclic carbonate : chain carbonate) is preferably in a range from 5 : 95 to 50 : 50, for example.

The electrolyte salt can be appropriately selected from known electrolyte salts. Examples of the electrolyte salt include lithium salts.

Examples of the lithium salt include inorganic lithium salts such as $LiPF_6$, $LiPO_2F_2$, $LiBF_4$, $LiClO_4$, and $LiN(SO_2F)_2$, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among these, an inorganic lithium salt is preferable, and $LiPF_6$ is more preferable.

The content of the electrolyte salt in the nonaqueous electrolyte solution is, at 20°C and 1 atm, preferably 0.1 mol/dm$^3$ or more and 2.5 mol/dm$^3$ or less, more preferably 0.3 mol/dm$^3$ or more and 2.0 mol/dm$^3$ or less, still more preferably 0.5 mol/dm$^3$ or more and 1.7 mol/dm$^3$ or less, particularly preferably 0.7 mol/dm$^3$ or more and 1.5 mol/dm$^3$ or less. When the content of the electrolyte salt is in the above-described range, the ionic conductivity of the nonaqueous electrolyte solution can be increased.

The nonaqueous electrolyte solution may contain an additive in addition to the nonaqueous solvent and the electrolyte salt. Examples of the additive include halogenated carbonic acid esters such as fluoroethylene carbonate (FEC) and difluoroethylene carbonate (DFEC); oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used singly, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less with respect to the mass of the entire nonaqueous electrolyte solution. When the content of the additive is in the above-described range, it is possible to improve the capacity retention performance or cycle performance after high-temperature storage, or to further improve the safety.

EXAMPLES

Hereinafter, the present invention will be described in more detail with reference to examples, but the present invention is not limited to the following examples.

[Example 1]

(Preparation of coating agent)

A coating agent was prepared by the following procedure so that a covering layer formed was a composite oxide represented by $Li_2TiO_3$. In a glove box with an argon atmosphere, titanium (IV) isoproxide ($Ti[(CH_3)_2CHO]_4$, manufactured by Aldrich) and a lithium ethoxide solution (1.0 mol/dm³ $C_2H_5OLi$ in ethanol, manufactured by Aldrich) were added to super dehydrated ethanol (manufactured by FUJIFILM Wako Pure Chemical Corporation) to prepare a coating agent. Here, the amounts of the titanium (IV) isopropoxide and the lithium ethoxide solution mixed were adjusted so that the molar ratio of titanium atoms : lithium atoms in the coating agent was 1:2.

(Production of active material particles)

As a particulate active material base material, $LiNi_{1/2}Co_{1/5}Mn_{3/10}O_2$ as a positive active material was provided. The surface of the active material base material was covered with a coating agent by rolling fluidized coating, followed by drying. As an apparatus for performing rolling fluidized coating, "FD-MP-micro" manufactured by Powrex Corporation was used. The temperature of the air inlet of the apparatus in coating was set to 100°C. The amount of covering with the coating agent was adjusted so that covering layer was formed at 0.50% with respect to the active material base material.

Subsequently, the active material base material covered with the coating agent in a dried state was heat-treated in an air atmosphere to obtain active material particles. The heat treatment time was 30 minutes, and the heat treatment temperature was 400°C.

Separately, the coating agent was dried and heat-treated under the above-described conditions to obtain powder, and powder X-ray diffraction measurement was performed on the obtained powder by the above-described method to confirm that the powder had a crystal structure. Therefore, the covering layer of the obtained active material particles is considered to contain $Li_2TiO_3$ having a crystal structure.

(Production of energy storage device)

Using the obtained active material particles, an energy storage device (all-solid-state battery) of Example 1 was produced in the following manner.

In a glove box with an argon atmosphere, the active material particles, a sulfide-based solid electrolyte ($Li_6PS_5Cl$), a conductive agent (acetylene black), and a binder (SBR) were weighed at 66.5 : 28.5 : 2 : 3 (mass ratio). First, the active material particles, the sulfide-based solid electrolyte and the conductive agent were mixed in an agate mortar. Next, to this mixture were added a binder and butyl acetate as a solvent, and the mixture was mixed by a hybrid mixer to obtain a positive electrode paste. The obtained positive electrode paste was applied onto an aluminum foil (average thickness: 20 pm) as a positive electrode substrate using YBA Baker Applicator so that the weight per unit area of the positive active material layer after drying of the solvent was 15 mg·cm⁻² or more and 25 mg·cm⁻² or less. This was dried in a dryer with an argon atmosphere at 100°C under normal pressure for 10 minutes, and then under reduced pressure for 10 minutes to form a positive active material layer on the positive electrode substrate. This was cut into a circle with a diameter of 10 mm to obtain a positive electrode for evaluation.

Next, 80 mg of a sulfide-based solid electrolyte ($Li_6PS_5Cl$) was inserted into a ceramic powder molding device having an inner diameter of 10 mm, and press-molded with a single-screw press at a pressure of 100 MPa for several seconds to form an isolation layer. The pressure was released, the produced positive electrode was then stacked on one surface of the isolation layer with the positive active material layer facing the isolation layer, and a pressure of 360 MPa was applied with a single-screw press for 5 minutes. The pressure was released, an indium foil (average thickness: 300 pm, diameter: 8 mm, manufactured by The Nilaco Corporation) and a lithium foil (average thickness: 300 pm, diameter: 6 mm, manufactured by Honjo Metal Co., Ltd.) as a negative electrode, and a SUS 316 foil (manufactured by The Nilaco Corporation) as a negative electrode substrate were then stacked on a surface of the positive electrode on a side opposite to the laminated surface, and a pressure of 50 MPa was applied with a single-screw press for several seconds. This was taken out from the ceramic powder molding device to obtain an energy storage device (all-solid-state battery) of Example 1.

[Examples 2 to 5]

Active material particles and energy storage devices of Examples 2 to 5 were produced in the same manner as in Example 1 except that the amount of covering with the coating agent was adjusted so that the content of the covering layer with respect to the active material base material was as described in Table 2.

[Comparative Example 1]

A coating agent was prepared by the following procedure so that a covering layer formed was a composite oxide represented by $Li_2ZrO_3$. In a glove box with an argon atmosphere, a zirconium (IV) propoxide solution ($Zr(OC_3H_7)_4$ in 1-propanol, manufactured by Aldrich) and a lithium ethoxide solution ($1.0mol/dm^3$ $C_2H_5OLi$ in ethanol, manufactured by Aldrich) were added to super dehydrated ethanol (manufactured by FUJIFILM Wako Pure Chemical Corporation) to prepare a coating agent. Here, the amounts of the zirconium (IV) propoxide solution and the lithium ethoxide solution mixed were adjusted so that the molar ratio of zirconium atoms : lithium atoms in the coating agent was 1:2.

Using the coating agent, active material particles and an energy storage device of Comparative Example 1 were produced in the same manner as in Example 1 except that the amount of covering with the coating agent was adjusted so that the content of the covering layer with respect to the active material base material was as described in Table 2.

[Comparative Example 2]

A coating agent was prepared by the following procedure so that a covering layer formed was a composite oxide represented by $LiTaO_3$. In a glove box with an argon atmosphere, tantalum (V) ethoxide ($Ta(OC_2H_5)_5$, manufactured by Aldrich) and a lithium ethoxide solution ($1.0$ $mol/dm^3$ $C_2H_5OLi$ in ethanol, manufactured by Aldrich) were added to super dehydrated ethanol (manufactured by FUJIFILM Wako Pure Chemical Corporation) to prepare a coating agent. Here, the amounts of the tantalum (V) ethoxide and the lithium ethoxide solution mixed were adjusted so that the molar ratio of tantalum atoms : lithium atoms in the coating agent was 1:1.

Using the coating agent, active material particles and an energy storage device of Comparative Example 2 were produced in the same manner as in Example 1 except that the amount of covering with the coating agent was adjusted so that the content of the covering layer with respect to the active material base material was as described in Table 2.

[Comparative Examples 3 to 6]

A coating agent was prepared by the following procedure so that a covering layer formed was a composite oxide represented by $Li_{4/3}Ti_{5/3}O_4$. In a glove box with an argon atmosphere, titanium (IV) isoproxide ($Ti[(CH_3)_2CHO]_4$, manufactured by Aldrich) and a lithium ethoxide solution ($1.0$ $mol/dm^3$ $C_2H_5OLi$ in ethanol, manufactured by Aldrich) were added to super dehydrated ethanol (manufactured by FUJIFILM Wako Pure Chemical Corporation) to prepare a coating agent. Here, the amounts of the titanium (IV) isopropoxide and the lithium ethoxide solution mixed were adjusted so that the molar ratio of titanium atoms : lithium atoms in the coating agent was 5 : 4.

Using the coating agent, active material particles and energy storage devices of Comparative Examples 3 to 6 were produced in the same manner as in Example 1 except that the amount of covering with the coating agent was adjusted so that the content of the covering layer with respect to the active material base material was as described in Table 2.

[Comparative Example 7]

An energy storage device of Comparative Example 7 was produced in the same manner as in Example 1 except that $LiNi_{1/2}Co_{1/5}Mn_{3/10}O_2$ as a positive active material was directly used as active material particles without being provided with a covering layer.

<Evaluation 1>

(1) Capacity confirmation test (1)

A capacity confirmation test (1) was conducted at a temperature of 50°C on each of the obtained energy storage devices in the following manner.

Constant current constant voltage charge was performed at a charge current of 0.1 C and an end-of-charge voltage of 3.75 V. With regard to the charge termination conditions, charge was performed until the charge current reached 0.025C. This was followed by a break period of 10 minutes. Thereafter, constant current discharge was performed at a discharge current of 0.1 C and an end-of-discharge voltage of 2.25 V. This was followed by a break period of 10 minutes.

A discharge capacity (0.1 C discharge capacity) in initial charge-discharge and a ratio of the discharge capacity to the charge capacity (charge-discharge efficiency) in initial charge-discharge were determined. The results are shown in Table 2.

(2) Charge-discharge cycle test (1)

Subsequently, a charge-discharge cycle test (1) was conducted at a temperature of 50°C on each energy storage device in the following manner.

Constant current constant voltage charge was performed at a charge current of 0.2 C and an end-of-charge voltage of 3.75 V. With regard to the charge termination conditions, charge was performed until the charge current reached 0.05C. Thereafter, constant current discharge was performed at a discharge current of 0.2 C and an end-of-discharge voltage of 2.25 V. The charge and the discharge were each followed by a break time of 10 minutes. This charge-discharge was performed 50 cycles. The discharge capacity at the 50th cycle was divided by the discharge capacity at the 1st cycle to determine a capacity retention ratio. The measurement results are shown in Table 2.

For each of the energy storage devices after the capacity confirmation test (1) (before the charge-discharge cycle test (1)) and after the charge-discharge cycle test (1), AC resistance at 1 kHz was measured at a temperature of 50°C by AC impedance measurement at a state of charge (SOC) of 100%. The ratio of increase in AC resistance after the charge-discharge cycle test (1) to the AC resistance after the capacity confirmation test (1) (before the charge-discharge cycle test (1)) was determined as a resistance increase rate. The measurement results are shown in Table 2.

[Table 2]

| | Covering layer | | Evaluation | | | |
|---|---|---|---|---|---|---|
| | Composition | Content /mass% | 0.1 C discharge capacity /mAhg$^{-1}$ | Charge-discharge efficiency /% | Capacity retention ratio /% | Resistance increase rate /% |
| Example 1 | $Li_2TiO_3$ | 0.10 | 174.0 | 84.1 | 95.7 | 123.1 |
| Example 2 | | 0.20 | 170.5 | 84.2 | 94.6 | 111.5 |
| Example 3 | | 0.50 | 170.8 | 83.8 | 94.8 | 112.8 |
| Example 4 | | 0.75 | 169.6 | 82.7 | 93.2 | 90.5 |
| Example 5 | | 1.00 | 166.7 | 83.4 | 91.2 | 111.1 |
| Comparative Example 1 | $Li_2ZrO_3$ | 0.50 | 175.3 | 84.0 | 93.9 | 161.3 |
| Comparative Example 2 | $LiTaO_3$ | 0.50 | 178.6 | 84.3 | 87.4 | 363.8 |
| Comparative Example 3 | $Li_{4/3}Ti_{5/3}O_4$ | 0.10 | 174.7 | 85.1 | 92.3 | 305.2 |
| Comparative Example 4 | | 0.20 | 175.4 | 85.0 | 92.7 | 291.1 |
| Comparative Example 5 | | 0.50 | 172.9 | 85.2 | 92.3 | 248.9 |
| Comparative Example 6 | | 0.75 | 165.0 | 83.6 | 92.8 | 234.1 |
| Comparative Example 7 | - | 0 | 172.3 | 83.0 | 91.2 | 367.0 |

As shown in Table 2, each of the energy storage devices of Examples 1 to 5 has a resistance increase rate of 130% or less, and an increase in resistance with charge-discharge cycles is sufficiently suppressed. Comparison among Examples 1 to 5 shows that when the content of the covering layer with respect to the content of the active material base material is relatively small, the discharge capacity, the charge-discharge efficiency and the capacity retention ratio tend to increase. On the other hand, even when the content of the covering layer was relatively small, there was little impact on the resistance increase rate, and the resistance increase rate was a sufficiently low value. On the other hand, when the covering layers in Comparative Examples 3 to 6 are $Li_{4/3}Ti_{5/3}O_4$, the resistance increase rate is 230% or more, and an increase in resistance with charge-discharge cycles is not sufficiently suppressed. In addition, when the content of the covering layer was small, the resistance increase rate significantly increased. The effect that an increase in resistance can be sufficiently suppressed even if the content of the co layer is small may be a unique effect that is provided when a predetermined composite oxide containing lithium atoms and titanium atoms is contained in the covering layer.

[Example 6]

(Preparation of solution applied to base material)

A solution to be applied to the base material was prepared by the following procedure so as to obtain a composition ratio of $Li_2Ti_{0.9}Nb_{0.1}O_3$. In a glove box with an argon atmosphere, niobium (V) ethoxide ($Nb(OCH_2CH_3)_5$), manufactured by Aldrich), titanium (IV) tetraisopropoxide ($Ti[(CH_3)_2CHO]_4$, manufactured by Aldrich) and a lithium ethoxide solution (1.0 mol/dm³ $C_2H_5OLi$ in ethanol, manufactured by Aldrich) were added to super dehydrated ethanol (manufactured by FUJIFILM Wako Pure Chemical Corporation) to prepare a solution to be applied to the base material. The amounts of the titanium (IV) tetraisopropoxide, the niobium (V) ethoxide and the lithium ethoxide solution mixed were adjusted so that the molar ratio of niobium atoms : titanium atoms : lithium atoms in the coating agent was 1 : 9 : 20.

(Production of particulate active material)

As a base material, powder of $LiNi_{0.5}Co_{0.2}Mn_{0.3}O_2$ as a lithium transition metal composite oxide having an $\alpha$-$NaFeO_2$-type crystal structure was provided. The solution to be applied to the base material was uniformly applied to the surfaces of the base material particles by rolling fluidized coating. As an apparatus for performing rolling fluidized coating, "FD-MP-micro" manufactured by Powrex Corporation was used. The temperature of the air inlet of the apparatus in coating was set to 140°C. The charge amount of the solution to be applied to the base material was adjusted so that the amount of the surface layer formed was 0.20% by mass with respect to the base material.

Subsequently, the base material in which ethanol was removed by drying from the solution applied to the base material, on the surfaces of the base material particles, was heat-treated under an air atmosphere to form a surface layer, thereby obtaining positive active material particles for a nonaqueous electrolyte secondary battery in Example 6. The heat treatment time was 30 minutes, and the heat treatment temperature was 400°C. Hereinafter, the term "positive active material particles for a nonaqueous electrolyte secondary battery" is sometimes abbreviated simply as "active material particles".

By the above-described method, the surface layer of the obtained active material particle was confirmed to be crystalline. Specifically, a solution prepared in the same procedure as that for the solution applied to the base material was heated under the same conditions as those in the production of the positive active material to obtain sample powder. Subsequently, the obtained sample powder was subjected to X-ray diffraction measurement. The X-ray diffraction measurement was performed by the above-described method. When a peak derived from the crystal structure was observed in the obtained X-ray diffraction diagram, it was determined that the surface layer was crystalline. From this result and the composition of the solution applied to the base material, it is considered that the surface layer of the obtained active material particle is crystalline, and the composition formula thereof is $Li_2Ti_{0.9}Nb_{0.1}O_3$.

(Production of nonaqueous electrolyte secondary battery)

Using the obtained active material particles, a nonaqueous electrolyte secondary battery (all-solid-state secondary battery) in Example 6 was produced in the following manner.

In a glove box with an argon atmosphere, the active material particles, a sulfide solid electrolyte ($Li_6PS_5Cl$) and a conductive agent (acetylene black) were mixed in an agate mortar. Subsequently, to this mixture were added a binder (SBR) and butyl butylate as a solvent, and the mixture was mixed by a hybrid mixer to obtain a positive composite. The obtained positive composite was applied onto an aluminum foil (average thickness: 20 pm) as a positive electrode substrate using YBA Baker Applicator so that the weight per unit area of the positive active material layer after drying of the solvent was 15 mg·cm⁻² or more and 25 mg·cm⁻² or less. This was dried in a dryer with an argon atmosphere set at a temperature allowing the solvent to volatilize, thereby forming a positive active material layer on the positive electrode substrate. This was cut into a circle with a diameter of 10 mm to obtain a positive electrode for evaluation.

Subsequently, 80 mg of a sulfide solid electrolyte ($Li_6PS_5Cl$) was inserted into a ceramic powder molding device having an inner diameter of 10 mm, and press-molded with a single-screw press at a pressure of 100 MPa for several seconds to form an isolation layer. The pressure was released, the produced positive electrode was then placed on one surface of the isolation layer, and pressure molding was performed with a single-screw press at 360 MPa for 5 minutes. The pressure was released, an indium foil (average thickness: 300 pm, diameter: 8 mm, manufactured by The Nilaco Corporation) and a lithium foil (average thickness: 300 pm, diameter: 6 mm, manufactured by Honjo Metal Co., Ltd.) as a negative electrode, and a SUS 316L foil (manufactured by The Nilaco Corporation) as a negative electrode substrate were then placed on a surface of the positive electrode on a side opposite to the bonded surface, and bonding was performed with a single-screw press at 50 MPa for several seconds. This was taken out from the ceramic powder molding device to obtain a nonaqueous electrolyte secondary battery (all-solid-state secondary battery) in Example 6.

[Examples 7 to 9]

Active material particles and nonaqueous electrolyte secondary batteries of Examples 7 to 9 were produced in the same manner as in Example 6 except that the molar ratio of niobium atoms : titanium atoms : lithium atoms in the solution to be applied to the base material was adjusted so that the composition of the solution to be applied to the base material was as shown in Table 3. By the same method as in Example 6, the surface layer of the obtained active material particle was confirmed to be crystalline.

[Example 10]

Active material particles and a nonaqueous electrolyte secondary battery of Example 10 were produced in the same manner as in Example 6 except that instead of niobium (V) ethoxide tantalum (V) ethoxide, tantalum (V) ethoxide ($Ta(OCH_2CH_3)_5$), manufactured by Aldrich) was used in preparation of a solution to be applied to the base material. By the same method as in Example 6, the surface layer of the obtained particle was confirmed to be crystalline.

[Examples 11 to 13]

Active material particles and nonaqueous electrolyte secondary batteries of Examples 11 to 13 were produced in the same manner as in Example 8 except that the charge amount of the solution to be applied to the base material was changed so that the ratio of the surface layer to the base material was as shown in Table 3. By the same method as in Example 6, the surface layer of the obtained active material particle was confirmed to be crystalline.

[Comparative Example 8]

Active material particles and a nonaqueous electrolyte secondary battery of Comparative Example 8 were produced in the same manner as in Example 6 except that the surface layer was not formed on the base material.

[Comparative Example 9]

Active material particles and a nonaqueous electrolyte secondary battery of Comparative Example 9 were produced in the same manner as in Example 6 except that niobium (V) ethoxide was not used in preparation of the solution to be applied to the base material, and adjustment was performed so that the molar ratio of titanium atoms : lithium atoms in the solution to be applied to the base material was 1:2. By the same method as in Example 6, the surface layer of the obtained particle was confirmed to be crystalline.

[Example 14]

(Preparation of solution applied to base material)

A solution to be applied to the base material was prepared by the following procedure so as to obtain a composition ratio of $Li_2Ti_{0.9}Zr_{0.1}O_3$. In a glove box with an argon atmosphere, zirconium (IV) propoxide ($Zr(OC_3H_7)_4$, manufactured by Aldrich), titanium (IV) tetraisopropoxide ($Ti[(CH_3)_2CHO]_4$, manufactured by Aldrich) and a lithium ethoxide solution (1.0 mol/dm$^3$ $C_2H_5OLi$ in ethanol, manufactured by Aldrich) were added to super dehydrated ethanol (manufactured by FUJIFILM Wako Pure Chemical Corporation) to prepare a solution to be applied to the base material. The amounts of titanium (IV) tetraisopropoxide, zirconium (IV) propoxide and the lithium ethoxide solution added were adjusted so that the molar ratio of zirconium atoms : titanium atoms : lithium atoms in the coating agent was 1 : 9 : 20.

(Production of particulate active material)

As a base material, powder of $LiNi_{0.5}Co_{0.2}Mn_{0.3}O_2$ as a lithium transition metal composite oxide having an $\alpha$-$NaFeO_2$-type crystal structure was provided. The solution to be applied to the base material was uniformly applied to the surfaces of the base material particles by rolling fluidized coating. As an apparatus for performing rolling fluidized coating, "FD-MP-micro" manufactured by Powrex Corporation was used. The temperature of the air inlet of the apparatus in coating was set to 140°C. The charge amount of the solution to be applied to the base material was adjusted so that the amount of the surface layer formed was 0.20% by mass with respect to the base material.

Subsequently, the base material in which ethanol was removed by drying from the solution applied to the base material, on the surfaces of the base material particles, was heat-treated under an air atmosphere to form a surface layer, thereby obtaining positive active material particles for a nonaqueous electrolyte secondary battery in Example 14. The heat treatment time was 30 minutes, and the heat treatment temperature was 400°C. Hereinafter, the term "positive active material particles for a nonaqueous electrolyte secondary battery" is sometimes abbreviated simply as "active material particles".

By the above-described method, the surface layer of the obtained active material particle was confirmed to be crystalline. Specifically, a solution prepared in the same procedure as that for the solution applied to the base material was heated under the same conditions as those in the production of the positive active material to obtain sample powder. Subsequently, the obtained sample powder was subjected to X-ray diffraction measurement. The X-ray diffraction measurement was performed by the above-described method. When a peak derived from the crystal structure was observed in the obtained X-ray diffraction diagram, it was determined that the surface layer was crystalline. From this result and the composition of the solution applied to the base material, it is considered that the surface layer of the obtained active material particle is crystalline, and the composition formula thereof is $Li_2Ti_{0.9}Zr_{0.1}O_3$.

(Production of nonaqueous electrolyte secondary battery)

Using the obtained active material particles, a nonaqueous electrolyte secondary battery (all-solid-state secondary battery) in Example 14 was provided in the following manner.

In a glove box with an argon atmosphere, the active material particles, a sulfide solid electrolyte ($Li_6PS_5Cl$) and a conductive agent (acetylene black) were mixed in an agate mortar. Subsequently, to this mixture were added a binder (SBR) and butyl butylate as a solvent, and the mixture was mixed by a hybrid mixer to obtain a positive composite. The obtained positive composite was applied onto an aluminum foil (average thickness: 20 pm) as a positive electrode substrate using YBA Baker Applicator so that the weight per unit area of the positive active material layer after drying of the solvent was 15 mg·cm$^{-2}$ or more and 25 mg·cm$^{-2}$ or less. This was dried in a dryer with an argon atmosphere set at a temperature allowing the solvent to volatilize, thereby forming a positive active material layer on the positive electrode substrate. This was cut into a circle with a diameter of 10 mm to obtain a positive electrode for evaluation.

Subsequently, 80 mg of a sulfide solid electrolyte ($Li_6PS_5Cl$) was inserted into a ceramic powder molding device having an inner diameter of 10 mm, and press-molded with a single-screw press at a pressure of 100 MPa for several seconds to form an isolation layer. The pressure was released, the produced positive electrode was then placed on one surface of the isolation layer, and pressure molding was performed with a single-screw press at 360 MPa for 5 minutes. The pressure was released, an indium foil (average thickness: 300 pm, diameter: 8 mm, manufactured by The Nilaco Corporation) and a lithium foil (average thickness: 300 pm, diameter: 6 mm, manufactured by Honjo Metal Co., Ltd.) as a negative electrode, and a SUS 316L foil (manufactured by The Nilaco Corporation) as a negative electrode substrate were then placed on a surface of the positive electrode on a side opposite to the bonded surface, and bonding was performed with a single-screw press at 50 MPa for several seconds. This was taken out from the ceramic powder molding device to obtain a nonaqueous electrolyte secondary battery (all-solid-state secondary battery) in Example 14.

[Examples 15 to 17]

Active material particles and nonaqueous electrolyte secondary batteries of Examples 15 to 17 were produced in the same manner as in Example 14 except that the molar ratio of zirconium atoms : titanium atoms : lithium atoms in the solution to be applied to the base material was adjusted so that the composition of the solution to be applied to the base material was as shown in Table 4. By the same method as in Example 14, the surface layer of the obtained active material particle was confirmed to be crystalline.

[Examples 18 to 20]

Active material particles and nonaqueous electrolyte secondary batteries of Examples 18 to 20 were produced in the same manner as in Example 16 except that the charge amount of the solution to be applied to the base material was changed so that the ratio of the surface layer to the base material was as shown in Table 4. By the same method as in Example 14, the surface layer of the obtained active material particle was confirmed to be crystalline.

[Comparative Example 10]

Active material particles and a nonaqueous electrolyte secondary battery of Comparative Example 10 were produced in the same manner as in Example 14 except that the surface layer was not formed on the base material.

[Comparative Example 11]

Active material particles and a nonaqueous electrolyte secondary battery of Comparative Example 11 were produced in the same manner as in Example 14 except that zirconium (IV) propoxide was not used in preparation of the solution to be applied to the base material, and adjustment was performed so that the molar ratio of titanium atoms : lithium atoms in the solution to be applied to the base material was 1:2. By the same method as in Example 14, the surface layer of the obtained active material particle was confirmed to be crystalline.

<Evaluation 2>

(1) Capacity confirmation test (2)

A capacity confirmation test (2) was conducted at 50°C on each of the obtained nonaqueous electrolyte secondary batteries in the following manner.
Constant current constant voltage charge was performed at a charge current of 0.1 C and an end-of-charge voltage of 3.75 V. With regard to the charge termination conditions, charge was performed until the charge current reached 0.025C. This was followed by a break period of 10 minutes. Thereafter, constant current discharge was performed at a discharge current of 0.1 C and an end-of-discharge voltage of 2.25 V. This was followed by a break period of 10 minutes.
Subsequently, constant current constant voltage charge was performed at a charge current of 0.1 C and an end-of-charge voltage of 3.75 V. With regard to the charge termination conditions, charge was performed until the charge current reached 0.025C. This was followed by a break period of 10 minutes. Thereafter, constant current discharge was performed at a discharge current of 1.0 C and an end-of-discharge voltage of 2.25 V
The percentage of a discharge capacity at a discharge current of 1.0 C to a discharge capacity at a discharge current of 0.1 C was determined, and defined as a discharge capacity ratio 1 C/0.1 C at each percentage. The results are shown in Tables 3 and 4.

(2) Charge-discharge cycle test (2)

A charge-discharge cycle test (2) was conducted at 50°C on each of the obtained nonaqueous electrolyte secondary batteries of Examples 6 and 10, Comparative Examples 8 and 9, Example 14 and Comparative Examples 10 and 11 in the following manner.
Constant current constant voltage charge was performed at a charge current of 0.2 C and an end-of-charge voltage of 3.75 V. With regard to the charge termination conditions, charge was performed until the charge current reached 0.05C. Thereafter, constant current discharge was performed at a discharge current of 0.2 C and an end-of-discharge voltage of 2.25 V. The charge and the discharge were each followed by a break time of 10 minutes. This charge-discharge was performed 50 cycles. The discharge capacity at the 50th cycle was divided by the discharge capacity at the 1st cycle to determine a capacity retention ratio after 50 cycles. The results are shown in Tables 3 and 4.
For each of the nonaqueous electrolyte secondary batteries of Examples 6 and 10, Comparative Examples 8 and 9, Example 14 and Comparative Examples 10 and 11 after the capacity confirmation test (2) (before the charge-discharge cycle test (2)) and after the charge-discharge cycle test (2), AC resistance at a frequency of 1 kHz at a SOC (State of Charge) of 100% was measured at a temperature of 50°C. The ratio of increase in AC resistance after the charge-discharge cycle test (2) to the AC resistance after the capacity confirmation test (2) (before the charge-discharge cycle test (2)) was determined from the following equation (1), and defined as a resistance increase rate. The results are shown in Tables 3 and 4.

$$\text{Resistance increase rate} = [\{(\text{AC resistance after charge-discharge cycle test (2)}) - (\text{AC resistance after capacity confirmation test (2)})\}/(\text{AC resistance after capacity confirmation test (2)})] \times 100 \ldots (1)$$

[Table 3]

| | Composition formula of surface layer | Ratio of surface layer to base material /mass% | Discharge capacity ratio at each percentage (1C/0.1C) /% | Capacity retention ratio after 50 cycles /% | Resistance increase rate (50th/1st) /% |
|---|---|---|---|---|---|
| Example 6 | $Li_2Ti_{0.9}Nb_{0.1}O_3$ | | 83.1 | 95.0 | 191 |
| Example 7 | $Li_2Ti_{0.95}Nb_{0.05}O_3$ | | 81.9 | - | - |
| Example 8 | $Li_2Ti_{0.8}Nb_{0.2}O_3$ | 0.20 | 84.2 | - | - |
| Example 9 | $Li_2Ti_{0.5}Nb_{0.5}O_3$ | | 81.0 | - | - |
| Example 10 | $Li_2Ti_{0.9}Ta_{0.1}O_3$ | | 78.0 | 93.9 | 232 |
| Example 11 | | 0.10 | 79.0 | - | - |
| Example 12 | $Li_2Ti_{0.3}Nb_{0.2}O_3$ | 0.50 | 82.3 | - | - |
| Example 13 | | 0.75 | 82.6 | - | - |
| Comparative Example 8 | - | - | 78.2 | 91.2 | 467 |
| Comparative Example 9 | $Li_2TiO_3$ | 0.20 | 70.0 | 94.6 | 212 |

[Table 4]

| | Composition formula of surface layer | Ratio of surface layer to base material /mass% | Discharge capacity ratio at each percentage (1C/0.1C) /% | Capacity retention ratio after 50 cycles /% | Resistance increase rate (50th/1st) /% |
|---|---|---|---|---|---|
| Example 14 | $Li_2Ti_{0.9}Zr_{0.1}O_3$ | | 78.3 | 94.4 | 197 |
| Example 15 | $Li_2Ti_{0.95}Zr_{0.05}O_3$ | 0.20 | 79.1 | - | - |
| Example 16 | $Li_2Ti_{0.8}Zr_{0.2}O_3$ | | 74.8 | - | - |
| Example 17 | $Li_2Ti_{0.5}Zr_{0.5}O_3$ | | 78.9 | - | - |
| Example 18 | | 0.10 | 73.5 | - | - |
| Example 19 | $Li_2Ti_{0.8}Zr_{0.2}O_3$ | 0.50 | 83.5 | - | - |
| Example 20 | | 0.75 | 80.2 | - | - |
| Comparative Example 10 | - | - | 78.2 | 91.2 | 467 |
| Comparative Example 11 | $Li_2TiO_3$ | 0.20 | 70.0 | 94.6 | 212 |

As shown in Table 3, with the positive active material of each of examples, which includes, on a surface of a base material including a substance capable of storing and releasing lithium ions, a surface layer containing a lithium element, a titanium element, an oxygen element, and at least one element that forms a pentavalent or higher monoatomic cation ($A^2$ element), with the surface layer satisfying $0 < x_2 \leq 0.5$ when a ratio between numbers of moles of the titanium and the $A^2$ element is Ti : $A^2$ = $(1-x_2)$ : $x_2$, a nonaqueous electrolyte secondary battery was obtained in which a decrease in battery capacity during high rate discharge is suppressed as compared to Comparative Example 9 in which the surface layer does not contain the $A^2$ element. With some of the positive active materials of examples, a nonaqueous electrolyte secondary battery was obtained in which a decrease in battery capacity during high rate discharge is suppressed as compared to Comparative Example 8 in which the surface layer is not provided. Comparison of Examples 6 and 10 with Comparative Example 8 shows that with a positive active material including the surface layer, a nonaqueous electrolyte secondary battery was obtained in which a decrease in battery capacity due to repeated charge-discharge is suppressed.

As shown in Table 4, with the positive active material of each of examples, which includes, on a surface of a base material including a substance capable of storing and releasing lithium ions, a surface layer containing a lithium element, a titanium element, an oxygen element, and at least one element that forms a tetravalent monoatomic cation having an ionic radius of more than 0.0605 nm when the coordination number is 6 ($A^3$ element), a nonaqueous electrolyte secondary battery was obtained in which a decrease in battery capacity during high rate discharge is suppressed as compared to Comparative Example 11 in which the surface layer does not contain the $A^3$ element. With some of the positive active materials of examples, a nonaqueous electrolyte secondary battery was obtained in which a decrease in battery capacity during high rate discharge is suppressed as compared to Comparative Example 10 in which the surface layer is not provided. Comparison of Examples 14 with Comparative Example 10 shows that with a positive active material including the surface layer, a nonaqueous electrolyte secondary battery was obtained in which a decrease in battery capacity due to repeated charge-discharge is suppressed.

INDUSTRIAL APPLICABILITY

The present invention can be applied to an energy storage device used as a power source for electronic devices such as personal computers and communication terminals, automobiles, and the like, and an electrode and the like provided in the nonaqueous electrolyte energy storage device.

DESCRIPTION OF REFERENCE SIGNS

1: positive electrode
2: negative electrode
3: isolation layer
4: positive electrode substrate
5: positive active material layer
6: negative active material layer
7: negative electrode substrate
10: energy storage device (all-solid-state secondary battery)
20: energy storage unit
30: energy storage apparatus

**Claims**

1. An active material particle comprising an active material base material and a covering layer covering at least a part of a surface of the active material base material,
wherein the covering layer contains a composite oxide containing lithium atoms and titanium atoms, and a molar ratio of a content of the lithium atoms to the titanium atoms in the composite oxide is more than 1 and 4 or less.

2. The active material particle according to claim 1, wherein a content of the covering layer with respect to a content of the active material base material is 0.01% by mass or more and 0.5% by mass or less.

3. The active material particle according to claim 1 or 2, wherein the composite oxide is represented by the following formula 1:

$$Li_{x1}TiO_yA^0_z \ldots \qquad 1$$

wherein $A^0$ represents one or more elements other than Li, Ti and O; $x_1$ is a number of more than 1 and 4 or less; y is a number of more than 2 and 4 or less; and z is a number of 0 or more and 1 or less.

4. A positive active material for a nonaqueous electrolyte secondary battery comprising a base material including a substance capable of storing and releasing lithium ions, and a surface layer which is present on a surface of the base material, and contains a lithium element, a titanium element, an oxygen element, and at least one element that forms a pentavalent or higher monoatomic cation ($A^2$ element), with the surface layer satisfying $0 < x_2 \leq 0.5$ when a ratio between numbers of moles of the titanium and the $A^2$ element is Ti : $A^2$ = $(1 - x_2) : x_2$.

5. The positive active material for a nonaqueous electrolyte secondary battery according to claim 4, wherein the surface layer is represented by the composition formula of $Li_{a2}(Ti_{1-x2}A^2_{x2})_{b2}O_{c2}$ (where A2 is at least one element that forms a pentavalent or higher monoatomic cation, and $a_2$, $b_2$ and $c_2$ are real numbers satisfying $1 < a_2 < 4$, $1 \leq b_2 < 2$ and $2 < c_2 < 4$, respectively).

6. A positive active material for a nonaqueous electrolyte secondary battery comprising a base material including a substance capable of storing and releasing lithium ions, and a surface layer which is present on a surface of the base material, and contains a lithium element, a titanium element, an oxygen element, and at least one element that forms a tetravalent monoatomic cation having an ionic radius of more than 0.0605 nm when a coordination number is 6 ($A^3$ element).

7. The positive active material for a nonaqueous electrolyte secondary battery according to claim 6, wherein the surface layer is represented by the composition formula of $Li_{a3}(Ti_{1-x3}A^3_{x3})_{b3}O_{c3}$ (where $A^3$ is at least one element that forms a tetravalent monoatomic cation having an ionic radius of more than 0.0605 nm when the coordination number is 6, and $a_3$, $b_3$, $c_3$ and $x_3$ are real numbers satisfying $1 < as < 4$, $1 \leq b_3 < 2$, $2 < c_3 < 4$ and $0 < x_3 < 1$ respectively).

8. An electrode comprising the active material particle according to any one of claims 1 to 3 or the positive active material for a nonaqueous electrolyte secondary battery according to any one of claims 4 to 7, and a solid electrolyte.

9. An electrode for a nonaqueous electrolyte secondary battery comprising a positive active material layer containing the positive active material for a nonaqueous electrolyte secondary battery according to any one of claims 4 to 7.

10. An energy storage device comprising the electrode according to claim 8 or 9.

11. A nonaqueous electrolyte secondary battery comprising the electrode according to claim 8 or 9.

12. An all-solid-state secondary battery comprising the electrode and the solid electrolyte according to claim 8 or 9.

13. A method for producing active material particles, comprising, in an order presented, covering at least a part of a surface of a particulate active material base material with a coating agent containing lithium atoms and titanium atoms, and heat-treating the active material base material covered with the coating agent, in which a molar ratio of a content of the lithium atoms to the titanium atoms in the coating agent is more than 1 and 4 or less.

14. An energy storage apparatus comprising two or more energy storage devices, and one or more of the energy storage devices according to claim 10, one or more of the nonaqueous electrolyte secondary batteries according to claim 11 and/or one or more of the all-solid-state secondary batteries according to claim 12.

Fig. 1

Fig. 2

## INTERNATIONAL SEARCH REPORT

| International application No. |
| --- |
| **PCT/JP2022/002443** |

| A. | CLASSIFICATION OF SUBJECT MATTER |
| --- | --- |

*C01G 53/00*(2006.01)i; *H01M 4/13*(2010.01)i; *H01M 4/36*(2006.01)i; *H01M 4/505*(2010.01)i; *H01M 4/525*(2010.01)i; *H01M 4/62*(2006.01)i; *H01G 11/06*(2013.01)i; *H01G 11/30*(2013.01)i; *H01M 10/052*(2010.01)i; *H01M 10/0562*(2010.01)i
FI: H01M4/36 C; H01M4/62 Z; H01M4/13; H01M4/505; H01M4/525; H01G11/06; H01G11/30; C01G53/00 A; H01M10/0562; H01M10/052

According to International Patent Classification (IPC) or to both national classification and IPC

| B. | FIELDS SEARCHED |
| --- | --- |

Minimum documentation searched (classification system followed by classification symbols)

C01G53/00; H01M4/13; H01M4/36; H01M4/505; H01M4/525; H01M4/62; H01G11/06; H01G11/30; H01M10/052; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2020-537319 A (LG CHEM, LTD.) 17 December 2020 (2020-12-17) example 3 | 1-3, 8-12, 13, 14 |
| A | | 4-7 |
| X | JP 2013-54926 A (SEIKO EPSON CORP.) 21 March 2013 (2013-03-21) claims 1-2 | 1-3, 8-12, 13, 14 |
| A | | 4-7 |
| X | JP 2012-234648 A (KOCHI UNIV.) 29 November 2012 (2012-11-29) examples | 1, 3, 8-12, 13, 14 |
| A | | 2, 4-7 |
| X | JP 2017-152294 A (TDK CORP.) 31 August 2017 (2017-08-31) examples | 1, 3, 8-12, 13, 14 |
| A | | 2, 4-7 |

☑ Further documents are listed in the continuation of Box C.    ☑ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **04 April 2022** | **19 April 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/002443**

**C.     DOCUMENTS CONSIDERED TO BE RELEVANT**

| Category* | Citation of document, with indication, where appropriate, of the relevant passages | Relevant to claim No. |
|---|---|---|
| A | JP 2018-160432 A (TAIHEIYO CEMENT CORP.) 11 October 2018 (2018-10-11) | 1-14 |
| A | JP 2019-53945 A (TOSHIBA CORP.) 04 April 2019 (2019-04-04) | 1-14 |
| A | JP 2020-35608 A (TOYOTA MOTOR CORP.) 05 March 2020 (2020-03-05) | 1-14 |

Form PCT/ISA/210 (second sheet) (January 2015)

## INTERNATIONAL SEARCH REPORT

International application No.

**PCT/JP2022/002443**

**Box No. III    Observations where unity of invention is lacking (Continuation of item 3 of first sheet)**

This International Searching Authority found multiple inventions in this international application, as follows:

Invention 1: Claims 1-3, 8-12 and 14
Documents 1-4 respectively disclose an "active material particle, comprising an active material matrix and a coating layer that covers at least a part of the surface of the active material matrix, wherein
the coating layer comprises a complex oxide containing a lithium atom and a titanium atom, and
the complex oxide has a lithium atom content relative to the titanium atom in a molar ratio of above 1 and 4 or less". Claim 1 lacks novelty in light of documents 1-4, and thus does not have a special technical feature. Accordingly, claims 1-3, 8-12 and 14 are classified as invention 1.
Invention 2: Claims 4-5
Claims 4-5 cannot be said to share a same or corresponding technical feature with claim 1 classified as invention 1.
Furthermore, claims 4-5 are not substantially identical to or similarly closely related to any of the claims classified as invention 1.
Therefore, claims 4-5 cannot be classified as invention 1.
Claims 4-5 are thus classified as invention 2.
Invention 3: Claims 6-7
Claims 6-7 cannot be said to share a same or corresponding technical feature with claim 1 classified as invention 1 or claim 4 classified as invention 2.
Furthermore, claims 6-7 are not substantially identical to or similarly closely related to any of the claims classified as invention 1 or 2.
Therefore, claims 6-7 cannot be classified as invention 1 or 2.
Claims 6-7 are thus classified as invention 3.
Invention 4: Claim 13
Claim 13 cannot be said to share a same or corresponding technical feature with claim 1 classified as invention 1, claim 4 classified as invention 2, or claim 6 classified as invention 3.
Furthermore, claim 13 is not substantially identical to or similarly closely related to any of the claims classified as invention 1 or 2.
Therefore, claim 13 cannot be classified as any of inventions 1, 2 and 3.
Claim 13 is thus classified as invention 4.

1. [✓] As all required additional search fees were timely paid by the applicant, this international search report covers all searchable claims.

2. [ ] As all searchable claims could be searched without effort justifying additional fees, this Authority did not invite payment of additional fees.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**    [ ] The additional search fees were accompanied by the applicant's protest and, where applicable, the payment of a protest fee.

[ ] The additional search fees were accompanied by the applicant's protest but the applicable protest fee was not paid within the time limit specified in the invitation.

[✓] No protest accompanied the payment of additional search fees.

Form PCT/ISA/210 (continuation of first sheet) (January 2015)

**INTERNATIONAL SEARCH REPORT**
**Information on patent family members**

International application No.

**PCT/JP2022/002443**

| Patent document cited in search report | | | Publication date (day/month/year) | Patent family member(s) | | | Publication date (day/month/year) |
|---|---|---|---|---|---|---|---|
| JP | 2020-537319 | A | 17 December 2020 | US example 3 EP KR CN | 2020/0343537 3686160 10-2019-0054977 111225879 | A1 A1 A A | |
| JP | 2013-54926 | A | 21 March 2013 | (Family: none) | | | |
| JP | 2012-234648 | A | 29 November 2012 | US examples CN | 2014/0065298 103493259 | A1 A | |
| JP | 2017-152294 | A | 31 August 2017 | (Family: none) | | | |
| JP | 2018-160432 | A | 11 October 2018 | (Family: none) | | | |
| JP | 2019-53945 | A | 04 April 2019 | US EP CN | 2019/0088941 3457476 109524632 | A1 A1 A | |
| JP | 2020-35608 | A | 05 March 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020537319 W
- WO 2018012522 A
- WO 2013046443 A
- JP 2020031052 A
- WO 2018043382 A
- JP 2011165467 A

**Non-patent literature cited in the description**

- **SCHANNON et al.** *Acta Cryst. A,* 1976, vol. 32, 751